# EUROPÄISCHE PATENTSCHRIFT

(11) **EP 0 447 423 B1**
(45) Veröffentlichungstag und Bekanntmachung des Hinweises auf die Patenterteilung: **13.10.1993**
(21) Anmeldenummer: 90900001.0
(22) Anmeldetag: 06.12.1989
(51) Int. Cl.: B29B 17/00

(54) **FORMTEIL AUS GESPRITZTEN ODER EXTRUDIERTEN KUNSTSTOFFABFÄLLEN**
PREFORM MADE FROM INJECTION MOULDED OR EXTRUDED PLASTIC WASTE MATERIALS
PREFORME EN DECHETS DE MATIERE SYNTHETIQUE FILES OU EXTRUDES

(30) Priorität: 06.12.1988 AT 2992/88
(43) Veröffentlichungstag der Anmeldung: 25.09.1991
(73) Patentinhaber: C.A. GREINER & SÖHNE GESELLSCHAFT M.B.H., A-4550 Kremsmünster (AT)
(72) Erfinder: PENTECOST, Mark, Alfred, James, A-4563 Micheldorf (AT)
(74) Vertreter: Secklehner, Günter, Dr.
(86) Internationale Anmeldenummer: AT8900117
(87) Internationale Veröffentlichungsnummer: WO9006218

(56) Entgegenhaltungen:
- DE-A- 1 454 871
- DE-A- 2 209 110
- DE-A- 3 150 352
- DE-A- 3 501 139
- US-A- 3 864 193
- US-A- 4 008 858
- US-A- 4 225 640

## Beschreibung

Die Erfindung betrifft einen Formteil aus gespritzten oder extrudierten Kunststoffteilen mit darin enthaltenen Kunststoffabfällen, die einen Fließpunkt aufweisen, der höher ist als eine maximale Verarbeitungstemperatur des Formteils und diese im Formteil verteilt eingeschweißt und bzw. oder eingebettet sind mit einer Flockengröße von kleiner 6 mm. Desweiteren umfaßt die Erfindung auch ein Verfahren zur Herstellung eines derartigen Formteils.

Es ist bereits ein Formteil aus extrudierten Kunststoffteilen mit darin entnaltenen Kunststoffabfällen bekannt - gemäß US-PS 3 864 193, auf welcher die Oberbegriffe der Ansprüche 1 und 18 basieren - bei welchem die Kunststoffabfälle einen Fließpunkt Aufweisen der höher ist als eine maximale Verarbeitungstemperatur des Formteils. Dementsprechend werden diese Kunststoffabfälle in den Formteil verteilt eingeschweißt. Die Flockengröße dieser Kunststoffabfälle ist kleiner als 6 mm. Durch die geringe Zumischmenge derartiger Kunststoffabfälle soll eine Plastiktafel bzw. Folie gebildet werden, die ähnlich aussieht, wie mundgeblasenes Glas. Als Konstruktionsteil ist dieser Formteil nicht verwendbar.

Es sind bereits die verschiedensten Formteile aus Altkunststoffen sowie verschiedene Verfahren zur Herstellung derartiger Formteile aus Altkunststoffen bekannt. Bei diesen Formteilen bzw. den Verfahren zum Herstellen derartiger Formteile ist man bis jetzt immer davon ausgegangen, daß zur Herstellung von Formteilen aus Altkunststoffen diese in sehr aufwendigen Verfahren voneinander getrennt und möglichst artgleiche Kunststoffe zur gemeinsamen Wiederverarbeitung zusammengefügt werden. All diesen meist sehr aufwendigen und daher auch sehr kostenintensiven Verfahren und den dazu notwendigen Vorrichtungen haftet der Nachteil an, daß eine wirtschaftliche Herstellung von Formteilen, die in ausreichendem Maß auf Biegung, Zug bzw. Dehnung beanspruchbar sind, nicht möglich ist.

Weiters ist daher ein Verfahren zur Herstellung von Formteilen aus gemischten Abfällen unterschiedlicher synthetischer Harze bekannt - gemäß DE-PS 25 58 987 - bei welchem vorgeschlagen wurde, die Kunststoffabfälle zu erhitzen und unter Druck zu setzen, worauf oder gleichzeitig dabei ein faserartiges Material eingemischt wird, dessen einzelne Fasern eine durchschnittliche Länge aufweisen, die etwa drei mal so groß ist, wie eine Durchschnittsgröße der aus den Altkunststoffen hergestellten Flocken. Die Flockengröße soll dabei bevorzugt 1 bis 4 mm betragen. Durch die Zugabe derartiger faserartiger Materialien soll die Biegefestigkeit, der Biegemodul, die Hitzedeflektionstemperatur unter Belastung sowie gegebenenfalls auch die Kerbschlagfähigkeit erhöht werden. Es ist dabei vorgesehen, auch endlose Fäden oder Bänder zur Verstärkung der Profile zu verwenden. Es wird jedoch auch hier davon ausgegangen, daß eine sinnvolle Anwendung des Verfahrens nur dann möglich ist, wenn möglichst gleichartige Kunststoffe oder nur geringe Anteile von anderen Kunststoffen beigemischt werden, um dadurch tatsächlich eine Festigkeitserhöhung zu erzielen. Durch das Auftrennen der Altkunststoffe in gleichartige Kunststoffe und die aufwendige Reinigung sind auch bei diesem Verfahren die Vorkosten sehr hoch, sodaß eine wirtschaftliche Anwendung in vielen Fällen nicht möglich ist.

Ein weiteres Problem insbesondere bei der Verarbeitung von Abfallkunststoffen die aus dem Hausmüll, Gewerbemüll oder sonstigen gesammelten Kunststoffen, wie Folien, Verpackungen, Flaschen oder dgl. stammen liegt in der Geruchsbelästigung beim fertigen Produkt. Um diese Geruchsbelästigung zu verhindern ist es bereits bekannt - gemäß EP-OS 0 062 957 - die Kunststoffabfälle insbesondere aus Hausmüll unterhalb des Erweichungspunktes bzw. Fließpunktes des Kunststoffes mit Dampf und bzw. oder kochendem Wasser zu behandeln und danach die Kunststoffaofälle in wesentlicher Abwesenheit von Wasserdampf zu schmelzen und weiter zu verarbeiten. Über die Zusammensetzung des Hausmülls bzw. die zu verwendenden Bestandteile und die Verarpeitung werden keine Aussagen getroffen, sodaß hinsichtlich der Beiastbarkeit keine Verbesserungen erreicht werden können.

Desweiteren ist es auch bereits bekannt - gemäß DE-OS 35 44 417 - Altkunststoffe aus dem Haushaltsmüll in unaufbereitetem Zustand einer Wiederverwendung zuzuführen. Um eine ausreichende Festigkeit sicherstellen zu können und eine bessere Haftung zwischen den unterschiedlichen Kunststoffteilen zu erreichen wird vorgeschlagen, ein derartiges Gemisch aus Altkunststoffen mit 20 % bis 40 % Holzfeinstgut und Farbbatsch zu vermengen, die als Bindemittel wirken und den sonst üblichen Entmischungseffekt beim Zumischen von Füllstoffen verhindern soll. Die gesamte Masse wird auf eine Temperatur von 100°C bis 210°C erhitzt, plastifiziert und zu einem Strang extrudiert. Dieser Strang wird über eine Taktwaage aufgeteilt und bei einer Temperatur zwischen 30°C und 60°C zu Formteilen verarbeitet. Nachteilig ist bei diesem Verfahren, daß ein hoher Anteil von Zuschlagstoffen verwendet werden muß, und damit der Anteil der zur Verarbeitung gelangenden Altkunststoffe geringer wird.

Durch den hohen Anteil an Holzfeinstgut wird überdies eine Festigkeitserhöhung nicht erreicht, sodaß die Bauteile grundsätzlich von ihren Beanspruchungseigenschaften bestenfalls mit Holz verglichen werden können.

Der vorliegenden Erfindung liegt nunmehr die Aufgabe zugrunde, einen Formteil aus verschiedenen insbesondere vermischten und teilweise vermengten Altkunststoffen zu schaffen, dessen zur Herstellung verwendetes Rohmaterial keiner allzu umfangreichen Vorbereitungsarbeiten bedarf und welcher in einem Arbeitsvorgang mit der Plastifizierung durch Extrudieren oder Spritzgießen hergestellt werden kann. Darüber hinaus soll ein Verfahren geschaffen werden, mit welchem die üblicherweise aus dem Hausmüll oder Gewerbemüll anfallende Mischung von Altkunststoffen ohne vorherige Aufteilung in die unterschiedlichen Typen der Kunststoffe und umfangreiche Reinigungsarbeiten zu stabilen Formteilen verarbeitet werden kann.

Diese Aufgabe der Erfindung wird dadurch gelöst, daß die Kunststoffabfälle zu mehr als 50 % des Volumens des Formteils einen Fließpunkt von über 80°C aufweisen und eine Teilmenge eine Wandstärke bzw. Dicke größer als 0,5 mm und eine weitere Teilmenge eine Wandstärke bzw. Dicke kleiner als 0,5 mm aufweist und diese mit organischen und bzw. oder mineralischen Verunreinigungen versehen sind und zumindest bei einem Teil der Kunststoffabfälle bis zu maximal 70 % des Volumens des Formteils ein Fließpunkt höher ist als die maximale Verarbeitungstemperatur, und diese sowie die organischen und bzw. oder mineralischen Verunreinigungen im Formteil verteilt eingeschweißt und bzw. oder eingebettet sind. Der nicht vorhersehbare überraschende Vorteil dieser Lösung liegt darin, daß durch die Mischung von sogenannten harten und weichen Kunststoffen nämlich Kunststoffabfällen mit Wandstärken größer als 0,5 mm und kleiner als 0,5 mm und einer Flockengröße von kleiner 6 mm unter Mitverwendung von Kunststoffabfällen, deren Fließpunkt höher ist als die maximale Verarbeitungstemperatur im Inneren des Formteils durch diese nicht vollständig plastifizierten Kunststoffabfälle ein Verstärkungsgerippe gebildet wird. Besonders vorteilhaft ist hierbei aber, daß keine Fremdstoffe notwendig sind um dieses Verstärkungsgerippe herzustellen, sondern daß dadurch daß die Verarbeitungstemperatur unterhalb des Fließpunktes eines Teils der Kunststoffabfälle festgelegt wird, dieses durch unter Miteinschluß der die nicht aufgeschmolzenen Kunststoffteilchen sowie eventuell organischer und bzw. oder mineralischer Verunreinigungen gebildet wird und ein diese in die plastifizierten Kunststoffabfälle eingeschweißt bzw. eingebettet werden. Damit wirken sie gleichzeitig als Haftvermittler für die übrigen Kunststoffbestandteile also auch festigkeitserhöhend, da sie im Formteilinneren in Art eines Verstärkungsfachwerkes wirken.

Nach einer anderen Ausführungsvariante der Erfindung ist vorgesehen, daß eine Hauptabmessung der Flocken der Kunststoffabfälle mit einem Fließpunkt über der Verarbeitungstemperatur und bzw. oder der organischen bzw. mineralischen Verunreinigungen überwiegend in etwa parallel zu einer Fließrichtung - Pfeil -einer Kunststoffschmelze des Formteils und bzw. oder einer Längserstreckung - Pfeil - des Formteils verläuft, wodurch in den Hauptbeanspruchungsrichtungen bei Verformungen insbesondere Verbiegungen und Zugbeanspruchungen diese meist eine höhere Festigkeit als die plastifizierten Kunststoffabfälle aufweisenden Teile festigkeitserhöhende Zugbänder bilden können. Dazu kommt, daß der tragende zwischen den eingebetteten bzw. eingeschweißten Kunststoffteilen oder Verunreinigungen befindliche plastifizierte Querschnitt des Kunststoffmaterials nicht allzusehr geschwächt wird, da zum überwiegenden Maß der kleinere Querschnitt in diesen stark beanspruchten Bereichen zu liegen kommt.

Weiters ist es auch möglich, daß der Volumsanteil der Kunststoffabfälle mit einer Dicke größer als 0,5 mm und einem Fließpunkt über der Verarbeitungstemperatur, vorzugsweise von über 250°C kleiner als 30 % des Formteilvolumens ist, wodurch eine zu starke Verringerung des aus dem plastifizierten Grundmaterial der Formteile hergestellten Traggerippes zuverläßig verhindert werden kann.

Vorteilhaft ist es aber auch, wenn der Volumsanteil an Kunststoffabfällen mit einer Dicke von kleiner als 0,5 mm und einem Fließpunkt über der Verarbeitungstemperatur, vorzugsweise von 250°C kleiner ist als 50 % des Volumens des Formteils, da die sogenannten weichen Kunststoffabfälle eine höhere Fähigkeit aufweisen, wodurch das Biegeverhalten vorteilhaft verbessert wird.

Weiters ist auch vorgesehen, daß die in den Formteilen eingebetteten Flocken der Kunststoffabfälle und bzw. oder die organischen bzw. mineralischen Verunreinigungen in allen Raumrichtungen über den Formteil annähernd gleichmäßig verteilt angeordnet sind, wodurch die Festigkeitseigenschaften über den gesamten Formteil in etwa gleich sind und damit ein ähnliches Grundverhalten erreicht wird, wie bei Formteilen, die aus reinem Kunststoff hergestellt sind.

Vorteilhaft ist es aber auch, wenn ein Volumsanteil der Flocken des Kunststoffabfalls mit einem Fließpunkt über der Verarbeitungstemperatur eines einer Oberfläche des Formteils unmittelbar benachbarten Volumsbereiches, z.B. eines Prüfkörpers, gröBer ist als 50 % des Volumsanteils der Flocken des Kunststoffabfalls in einem von der Oberfläche des Formteils distanziert angeordneten Volumsbereich, z.B. eines Prüfkörpers, desselben, da dadurch die nunmehr als sehr vorteilhaft erkannte Wirkung der Flocken des Kunststoffabfalls auch in den bei Biegungen stark beanspruchten Oberflächenbereichen zur Wirkung gelangen können und trotzdem über den gesamten Querschnitt des Formteils eine gute Homogenität erzielt wird.

Weiters ist es auch möglich, daß ein Volumen der Flocken der Kunststoffabfälle mit einem Fließpunkt oberhalb der Verarbeitungstemperatur und bzw. oder der organischen bzw. mineralischen Verunreinigungen maximal 70 % des Volumens des Formteils beträgt. Dadurch wird sichergestellt, daß noch eine ausreichende Menge an Kunststoffabfällen zum Einbetten und Verchweißen der nicht plastifizierten Bestandteile bzw. Verunreinigungen vorliegt und trotzdem noch ein tragfähiger Formteil erzielt werden kann.

Nach einer anderen Weiterbildung ist vorgesehen, daß von dem Volumensanteil der Kunststoffabfälle, deren Fließpunkt über der Verarbeitungstemperatur aes Formteils liegt, maximal 30 % des Volumens durch Flocken mit einer Wandstärke bzw. Dicke von größer als 0,5 mm gebildet ist. Dadurch wird eine sehr feinfaserige Stützstruktur durch die nicht plastifizierbaren Kunststoffabfälle erreicht, die zu einer hohen Festigkeit des Formteils beiträgt.

Vorteilhaft ist es weiters, wenn die Kunststoffabfälle mit einem Hitzestabilisator und bzw. oder einem Lichtstabilisator versetzt sind, da dadurch eine höhere Haltbarkeit der hergestellten Formteile bzw. der Abrand von weniger stabilen Bestandteilen während der Plastifizierung der Kunststoffabfälle verhindert werden kann.

Es ist aber auch möglich, daß die Kunststoffabfälle mit einem Flammhemmstoff und bzw. oder einem 0xydationshemmstoff versetzt sind, wodurch das Einsatzgebiet der Formteile vergrößert wird, da auch flammbeständige Formteile herstellbar sind. Überdies kann eine zusätzliche Verringerung der Qualität durch zu starke Oxydation während der Verarbeitung der Kunststoffabfälle dadurch ebenfalls ausgeschaltet werden.

Von Vorteil ist es aber auch, wenn den Kunststoffabfällen ein Farbstoff und bzw. oder ein UV-Absorber oder ein Antistatikmittel zugesetzt ist, da dadurch ein breiteres Verwenbungsspektrum wie bei aus einem Kunststoff hergestellten Formteilen erzielt werden kann.

Nach einer anderen Ausführungsvariante ist vorgesehen, daß den Kunststoffabfällen ein Treibmittel zugesetzt ist, welches bei Überschreiten einer vordefinierbaren Temperatur und eines vordefinierbaren Druckes aufschäumt bzw. Treibgase freisetzt, wodurch die durch das Aufschäumen gebildete Sandwichstruktur zur zusätzlichen Verfestigung der Formteile herangezogen und gleichzeitig das Gesamtgewicht derartiger Formteile bei höheren Wandstärken verringert werden kann.

Nach einer anderen Weiterbildung ist vorgesehen, daß bis zu maximal 50 % des Volumens des Formteils durch Füllstoffe gebildet sind, wodurch die charakteristischen Eigenschaften eines derartigen aus Altkunststoffen nergestellten Formteils noch erhalten bleiben.

Weiters ist es auch möglich, daß die Füllstoffe Holzmehl und bzw. oder Kalziumverbindungen, z.B. Kreide oder Talg, sind, da dadurch eine gute Verbindung vor allem zwischen den nicht vollständig plastifizierten Kunststoffabfällen und den Füllstoffen erzielt wird.

Von Vorteil ist es weiters auch, wenn über den aus Kunststoffabfällen gebildeten Querschnitt des Formteiles verteilt insbesondere fadenartige Verstärkungselemente eingebracht sind, wodurch insbesondere bei endlosen Fäden eine Verstärkung in Zugbandrichtung erreicht werden kann.

Dabei ist es auch möglich, daß die Verstärkungselemente durch Keramik-, Kevlar-, Karbon- oder Metallfäden und bzw. oder aus derartigen Fäden gebildeten Gewirken oder Netzen bestehen, da damit gleichzeitig auch je nach den verwendeten Fäden eine antistatische Ausrüstung der Formteile geschaffen und überdies das Schwingungsverhalten derartiger Formteile verbessert werden Kann.

Nach einer anderen Ausführungsform ist vorgesehen, daß die Kunststoffabfälle durch in unterschiedlichen Raumrichtungen angeordnete kurze Fäden gebildet sind, wodurch eine Versteifung des Formteiles in mehreren Raumrichtungen erzielt werden kann und somit eine in allen Raumrichtungen in etwa gleichmäßige Festigkeitsernöhung des Formteils erreicht werden kann.

Weiters umfaßt die Erfindung auch ein Verfahren zur Herstellung von Formteilen durch das Plastifizieren von Kunststoffteilen mit darin enthaltenen Kunststoffabfällen mit einer Flockengröße von kleiner 6 mm die einen Fließpunkt aufweisen, der höher ist als eine maximale Verarbeitungstemperatur des Formteils und unter Einwirkung einer wendelförmigen Bewegung plastifiziert werden, insbesondere zur Herstellung von Formteilen.

Dieses Verfahren ist dadurch gekennzeichnet, daß eine Teilmenge der Kunststoffabfälle eine Wandstärke bzw. Dicke größer als 0,5 mm und eine weitere Teilmenge eine Wandstärke bzw. Dicke kleiner als 0,5 mm aufweist und ein Teil der Kunststoffabfälle bis zu maximal 70 % des Volumens des Formteiles einen Fließpunkt aufweist, der höher ist als eine maximale Verarbeitungstemperatur des Formteils und daß die Kunststoffabfälle gemeinsam mit den organischen und bzw. oder mineralischen Verunreinigungen, die einen Fließpunkt, der kleiner oder gleich der Verarbeitungstemperatur ist, bei einer Verarbeitungstemperatur zwischen 150°C und 210°C und steigendem Druck plastifiziert und die Kunststoffabfälle sowie die Verunreinigungen mit einem über der Verarbeitungstemperatur liegendem Fließpunkt dabei und bzw. anschließend davon gleichmäßig in der Kunststoffschmelze verteilt werden und daß diese Kunststoffschmelze insbesondere kontinuierlich durch eine Düse ausgetragen oder in eine Form eingespritzt wird. Durch die bewußte Mirverarbeitung von Kunststoffabfällen, die einen Fließpunkt aufweisen, der über der Verarbeitungstemperatur liegt, und daß die organischen und bzw. oder mineralischen Verunreinigungen mitverarbeitet werden können, wird sichergestellt, daß jene Kunststoffabfälle, deren Fließpunkt über der Verarbeitungstemperatur liegt, als Stärkungsmaterialien herangezogen werden können. Dadurch werden zusätzliche weitere Füll- oder Verstärkungseinlagen vermieden, und es wird trotzdem ein "faserverstärkter Formteil erreicht. Diese überraschende Erkenntnis ermöglicht es aber nunmehr auch, die vorangehenden Arbeitsvorgänge und Aufwendungen für die Aufbereitung der Kunststoffabfälle erheblich zu verringern, da die ursprünglich als nachteilig angesehenen und durch umfangreiche Vorbehandlungen zur Ausscheidung vorgesehenen Kunststoffabfälle und Verunreinigungen nunmenr bewußt zur Erhöhung der Festigkeit dieser Formteile herangezogen werden können. Dazu dient insbesondere die gleichmäßige Verteilung dieser nicht plastifizierten Kunststoffabfälle und Verunreinigungen. Dieser bewußt durchgeführte Verfahrensschritt, wofür der Fachmann die ihm bekannten Maßnahmen, wie entsprechende Knetvorgänge oder Mischvorgänge durch Zerteilen und Zusammenschweißen der plastifizierten Masse und dgl. verwenden kann, ermöglichen eine gleiche Verteilung dieser nicht plastifizierten Kunststoffabfälle und Verunreinigungen über das gesamte Volumen des Formteils und damit einheitliche Festigkeitswerte.

Von Vorteil ist es weiters, wenn in dem der Düse zugewandten Endbereich der Plastifiziervorrichtung z.B. einem Extruder ein Schmelzevorrat gebildet wird und dieser periodisch, insbesondere durch die wendeformige Bewegung ausgetragen wird, da dadurch die Schmelze die aus derartigen Kunststoffen gewonnen wird, auch zur Herstellung von Spritzgußteilen herangezogen werden kann.

Nach anderen weiteren Maßnahmen ist vorgesehen, daß der mit Feuchtigkeit versetzte Kunststoffabfall und die Verunreinigungen sowie gegebenfalls die Additive bzw. Füllstoffe durchmischt und auf eine Temperatur von über 100°C ernitzt werden, worauf die bis dahin entstandenen Dämpfe abgeführt werden und daß die Mischung weiter verdichtet und erhitzt wird und bei einer Temperatur von über 140°C, jedoch unterhalb einer vordefinierten Verarbeitungstemperatur, Reaktionsgase aus der teilhomogenisierten Mischung abgeführt werden und danach die Mischung unter erheblicher Verdichtung plastifiziert und auf die Verarbeitungstemperatur erwärmt wird, worauf die Kunststoffschmelze mit den eingelagerten Verunreinigungen und den noch nicht plastifizierten Kunststoffabfällen mit einem Fließpunkt, der über der Verarbeitungstemperatur liegt, durch eine Düse oder in eine Form ausgetragen wird. Durch die Erhitzung der Kunststoffabfälle in mehreren Stufen ist es nunmehr auch möglich mit Feuchtigkeit versetzten Kunststoffabfall direkt weiterzuverarbeiten, ohne diesen erst vorerst unter zusätzliche Energiezufuhr trocknen zu müssen. Dadurch, daß in einem Temperaturbereich von ca. 100°C die Feuchtigkeit als Wasserdampf von den Kunststoffabfälle entfernt wird, ist eine nachteilige Beeinflussung der hergestellten Formteile nicht möglich, wobei die chemische Entgasung davon getrennt bei einem Temperaturbereich von über 140°C stattfindet. Durch diese doppelte Entgasung und die langsame Erwärmung können auch jene Kunststoffabfälle, deren Fließpunkt über der Verarbeitungstemperatur liegt, soweit erweicht werden, daß ein Verkleben bzw. Verschweißen mit den sie umgebenden Materialien bzw. den plastifizierten Kunststoffabfällen erfolgen kann.

Es ist aber auch möglich, daß der Druck in der Kunststoffschmelze zwischen der Plastifiziervorrichtung und der Düse zusätzlich erhöht wird und diese mit konstantem Fördervolumen ausgetragen wird, wodurch trotz der nahezu willkürlichen Mischung der Kunststoffabfälle homogene Formteile hergestellt werden können.

Vorteilhaft ist es aber auch, wenn zwischen dem Ende der Plastifiziervorrichtung und dem Austritt aus der Düse bzw. dem Eintritt in eine Form nicht aufgeschmolzene oder nur zum Teil aufgeschmolzene Kunststoffabfälle sowie die Verunreinigungen im wesentlichen gleichmäßig über den Düsenquerschnitt oder den Formhohlraum verteilt werden, da danach der Schmelzestrang nicht mehr massiv geknetet wird, und ein erreichter Verteilungsgrad bis zur Fertigstellung des Formteils in etwa beibehalten werden kann.

Nach einer anderen Ausführungsform ist vorgesehen, daß die Kunststoffschmelze auf eine Vielzahl parallel laufender Schmelzestränge aufgeteilt und diese unmittelbar danach wieder zu einem Schmelzestrom zusammengeschweißt und danach durch die Düse in einen Kaliber oder die Form ausgetragen werden. Vorteilhaft ist hierbei, daß durch die Aufteilung in mehrere Schmelzestränge in dem kleineren Volumen des Schmelzestrangs eine intensivere Durchmischung und damit eine gleichmäßigere Verteilung der nicht plastifizierten Flocken möglich ist.

Weiters ist es auch möglich, daß der Schmelzestrom daran anschließend in eine räumliche Schmelzebahn verformt wird, wodurch ein etwa erreichter Verteilungsgrad der nicht plastifizierten Flocken der Kunststoffabfälle auch bei der Bildung eines räumlich gekrümmten Formteils im Zuge eines Extrusionsvorganges die bereits erreichte Verteilung nicht mehr stören kann.

Nach einer anderen Variante ist vorgesehen, daß an die Düse anschließend die Schmelzebahn kalibriert und insbesondere durch eine Flüssigkeit abgekühlt wird, wodurch die erreichte Verteilung und Orientierung der nicht plastifizierten Kunststoffabfälle bzw. der Verunreinigungen beibehalten und damit im Formteil fixiert werden kann.

Nach einer anderen Ausführungsvariante ist vorgesehen, daß während des Austragens der Kunststoffschmelze durch die Düse bzw. in die Form in Extrusionsrichtung und bzw. oder quer dazu insbesondere endlose fadenartige Verstärkungselemente eingebracht werden, wodurch auch mit geringeren Wandstärken höhere Biege- bzw. Zugfestigkeiten der Formteile erreicht werden können.

Vorteilhaft ist es hierbei, wenn die fadenartigen Verstärkungselemente durch Keramik-, Kevlar-, Karbon- oder Metallfäden und bzw. oder aus derartigen Fäden gebildeten Gewirken oder Netzen gebildet sind, da je nach der Art der verwendeten Fäden unterschiedliche Festigkeitseigenschaften bei aus Altkunststoffen hergestellten Formteilen erreichbar sind.

Von Vorteil ist es weiters, wenn mehrere über den Querschnitt des Formteils verteilt angeordnete Verstärkungselemente angeordnet sind, da dadurch eine zusätzliche räumliche Versteifung mit den Verstärkungselementen erreicht wird.

Nach einer anderen weiteren Maßnahme ist vorgesehen, daß die über den Querschnitt des Formteils verteilt angeordneten Verstärkungselemente untereinander verbunden werden, wodurch eine gewünschte Position der Verstärkungselemente in allen Raumrichtungen innerhalb des Formteils beibehalten werden kann.

Eine einfache aber wirksame Verstärkung eines aus Altkunststoffen hergestellten Formteils ist dadurch möglich, daß die Verstärkungselemente nahe einer Oberfläche des Formteils angeordnet sind, da vor allem bei Verbiegungen des Formteils Zugspannungen im Bereich der Oberfläche des Formteils oder der diesen unmittelbar benachbarten Bereichen auftreten.

Von Vorteil ist es aber auch, wenn auf die räumlich verformte Schmelzebahn insbesondere vor dem Durchtritt durch die Düse eine Deckschicht aufgebracht wird, da dadurch das äußere Aussehen und die Gestaltung an ein aus reinen Kunststoffen hergestelltes Profil bzw. einen Formteil angepaßt werden kann.

Es ist aber auch möglich, daß sich die Deckschicht nur über einen Teil der Oberfläche des Formteils erstreckt, wodurch beispielsweise nur die sichtbaren Teile eines Formteils, wenn dieser in einem Gehäuse oder dgl. eingebaut wird, mit einer Deckschicht aufgebessert werden müssen.

Vorteilhaft ist es aber auch, wenn die Kunststoffabfälle mit einem Treibmittel versetzt werden und das Treibmittel bei einer Temperatur und einem Druck im Endbereich der Plastifizierzone die Kunststoffschmelze aufschäumt bzw. in gasförmigen Zustand übergeht, da dadurch eine noch bessere Verteilung der Altkunststoffe während des Schäumvorgangs innerhalb des Formteils erzielt wird.

Weiters ist es auch möglich, daß eine Dicke der Schmelzebahn im Bereich der Düse größer ist als im Bereich der Kalibrierung, wodurch eine zusätzliche Verfestigung des Formteils erzielt werden kann.

Nach einer anderen Ausführungsform ist vorgesehen, daß die Geschwindigkeit des Schmelzestroms bzw. der Schmelzebahn im Bereich der Düsenöffnung kleiner ist als im daran anschließenden Bereich, wodurch der Formteil bei der Herstellung überstreckt bzw. überdehnt werden kann, und damit bessere Schrumpfungsverhalten bei unterschiedlichen Temperaturen erzielt werden können.

Zum besseren Verständnis der Erfindung wird diese im nachfol- genden anhand der in den Zeichnungen dargestellten Ausführungsbeispiele näher erläutert.

Es zeigen:
- Fig. 1: einen erfindungsgemäßen Formteil in schaubildlicher Darstellung und in Art eines Phantombildes;
- Fig. 2: ein Diagramm, welches die Zugfestigkeit verschiedener Kunststoffe in Abhängigkeit von der Temperatur zeigt;
- Fig. 3: einen Teil eines erfindungsgemäßen, als Rundstangen-Vollprofil ausgebildeten Formteil in schaubildlicher Darstellung;
- Fig. 4: einen aus einem Mittelbereich des Formteils nach Fig.3 herausgeschnittenen Prüfkörper in schaubildlicher Darstellung;
- Fig. 5: einen aus dem Oberflächenbereich des Formteils nach Fig.3 herausgeschnittenen Prüfkörper in schaubildlicher Darstellung;
- Fig. 6: einen anderen erfindungsgemäßen Formteil, geschnitten und in schaubildlicher Darstellung;
- Fig. 7: eine Anlage zur Durchführung des Verfahrens zur Herstellung von erfindungsgemäß ausgebildeten Formteilen in stark vereinfachter schematischer Darstellung;
- Fig. 8: einen Extruder zur Herstellung von erfindungsgemäßen Formteilen in Seitenansicht, teilweise geschnitten;
- Fig. 9: den Extruder nach Fig.8 in Draufsicht, geschnitten, gemäß den Linien IX-IX in Fig.8;
- Fig.10: eine Zusatzvorrichtung zwischen einer Düse und einem Extruder zur Homogenisierung des Schmelzestranges;
- Fig.11: eine Mischvorrichtung zum Durchmischen der Flocken aus den nicht plastifizierten Altkunststoffen und deren gleichmäßiger Verteilung in der plastifizierten Kunststoffschmelze in Seitenansicht, geschnitten, gemäß den Linien XI-XI in Fig.12;
- Fig.12: einen Teil der Mischvorrichtung nach Fig.7 in Stirnansicht, gemäß den Linien XII-XII in Fig.11;
- Fig.13: verschiedene Polymerketten und deren Verbindung in schematisch vereinfachter Darstellung;
- Fig.14: eine Düse zum Verarbeiten von Recyclingkunststoffen in Seitenansicht, geschnitten und stark vereinfachter schematischer Darstellung.

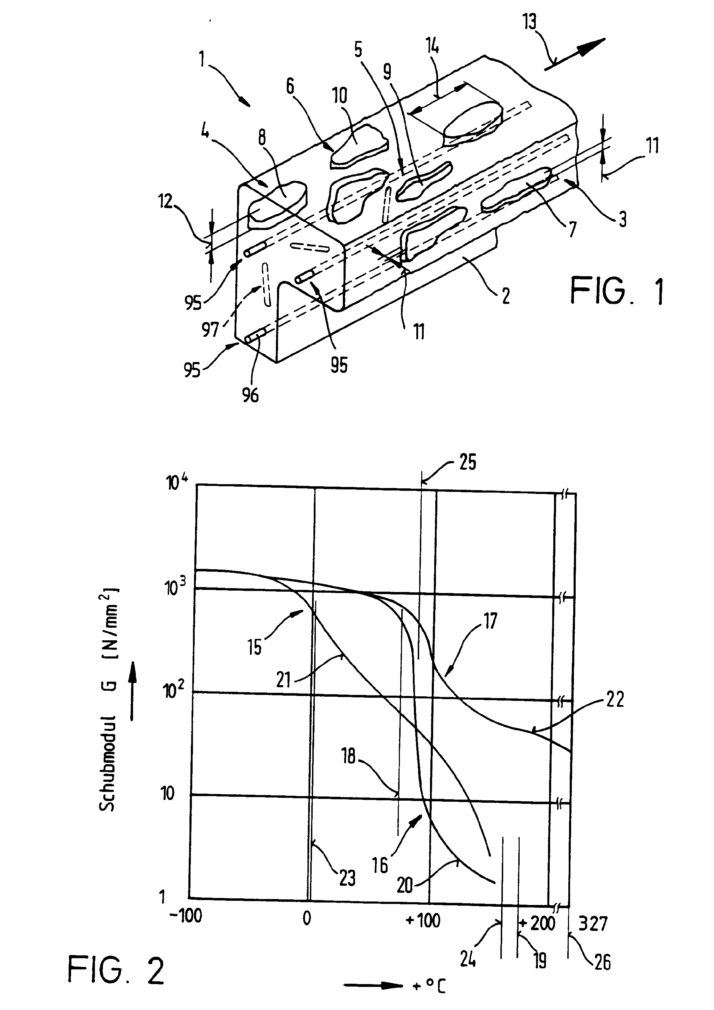

In Fig.1 ist ein Formteil 1 gezeigt der aus einem Tragkörper 2 aus plastifiziertem Kunststoff und darin eingeschlossenen Kunststoffabfällen 3 und 4 sowie aus organischen und bzw. oder metallischen Verunreinigungen 5,6 besteht. Sowohl der Kunststoffabfall 3,4 als auch die Verunreinigungen 5,6 bestehen aus Flocken 7,8 bzw. 9,10, die aus den beispielsweise im Haushalt enthaltenen Kunststoffteilen hergestellt werden. Man unterscheidet bei diesen Kunststoffteilen prinzipiell zwischen harten Kunststoffabfällen, daß sind im wesentlichen Kunststoffabfälle mit einer Wandstärke größer 0,5 mm während Kunststoffteile mit einer Wandstärke kleiner als 0,5 mm als weiche Kunststoffabfälle bezeichnet werden. Sollen nun die aus dem Hausmüll erhaltenen Kunststoffabfälle weiter verarbeitet werden, so ist zu berücksichtigen, daß sich diese aus den verschiedensten Thermoplasten und Duroplasten zusammensetzen. So besteht eine typische Mischung von Kunststoffabfällen aus dem Hausmüll aus ca. 65 % Polyolifinen, daß sind Polyäthylen (PE) und Polypropylen (PP). Dazu kommen ca. 15 % Polystyrol (PS) und 10 % Polyvinylchlorid (PVC) sowie 5 % PET-Polyäthylen-Terephtalat und 5 % anderen Kunststoffen. Bei dieser Mischung kann man davon ausgehen, daß sie einen sehr hohen Prozentsatz sogenannter weicher Kunststoffabfälle mit einer Wandstärke kleiner 0,5 mm umfaßt, während ein kleinerer Teil davon harte Kunststoffe mit einer Wandstärke von größer 0,5 mm sind.

Nachdem diese Kunststoffabfälle 3 bzw. 4 aus dem Hausmüll, aus dem Gewerbemüll oder sonst irgendwie gesammelten insbesondere gemischten Abfallstoffen gewonnen werden, sollen sie möglichst in unverändertem Zustand für die Herstellung von Formteilen verwendet werden und sind sowohl mit mineralischen als auch mit organischen Verunreinigungen 5 bzw. 6 versehen. Dazu kommt, daß die vorerwähnten Kunststoffabfälle bei gleichen Temperaturen unterschiedliche Zustandsformen aufweisen. Während einige dieser Kunststoffe sich bereits im plastischen Zustand, also oberhalb eines Fließpunktes bzw. einer Fließtemperatur befinden sind andere Kunststoffabfälle noch in ihrem weichgummiartigen bzw. gummielastischen Bereich.

Grundsätzlich kann man davon ausgehen, daß thermoplastische Kunststoffe, wie beispielsweise Polyvinylchlorid, eine harte Zustandsform aufweisen, an die eine gummielastische und schließlich eine weichgummiartige anschließt. Die Zustandsänderung vom harten auf den gummielastischen Zustand erfolgt bei einer Erhitzung der Kunststoffabfälle über die sogenannte Einfriertemperatur. Mit dem Erreichen der Einfriertemperatur werden nämlich die molekularen Freiheitsgrade der Rotation aller Molekülgruppen angeregt, wodurch größere Segmente der Polymerenketten die innere Beweglichkeit erlangen. Die Moleküle bleiben jedoch auch oberhalb des Einfrierpunktes noch an bestimmten Haftpunkten miteinander verbunden, sodaß sich eine dreidimensionale Netzwerkstruktur ergibt, die das ausgeprägte gummielastische Verhalten oberhalb der Einfriertemperatur bedingt.

Werden die Kunststoffe und dies gilt auch für die Kunststoffab- fälle dann weiter erwärmt, nimmt die Zahl der Haftstellen mit steigender Temperatur rasch ab, wodurch das Material zunehmend weichgummiartig wird. Wird dann der sogenannte Fließpunkt überschritten, so ist die Netzwerkstruktur schließlich vollständig abgebaut und die Verformung der Kunststoffe bzw. auch der Kunststoffabfälle erfolgt weitgehend plastisch.

Diese beiden wesentlichen Temperaturgrenzen, nämlich die Einfriertemperatur und die Fließtemperatur bzw. der Fließpunkt, ist aber bei den verschiedenen insbesondere im Haushaltsmüll enthaltenen Kunststoffen nicht zuletzt durch die unterschiedliche Dotierung stark unterschiedlich. Während der Fließpunkt bzw. Schmelzpunkt bei PVC je nach Dotierung über 120°C liegt, liegt er bei Polyäthylenterephtalat (PET) bei ca. 270°C. Dies hat nun zur Folge, daß bei einer Verarbeitungstemperatur zwischen ca. 150°C und 220°C jene Kunststoffabfälle 3 und 4 sowie Verunreinigungen 5 und 6 der Fließpunkt über diesem Verarbeitungstemperaturbereich liegt, bzw. die bei diesen Temperaturen noch nicht schmelzen und auch noch nicht brennen, in den Tragkörper 2 eingebettet bzw. eingeschweißt werden. Der Tragkörper 2 besteht aus all jenen Kunststoffabfällen, deren Fließpunkt unterhalb der Verarbeitungstemperatur von ca. 150°C bis 220°C liegt und die, wie dies später noch anhand der dargestellten Vorrichtungen erläutert werden wird, dadurch plastifiziert und untereinander vermischt werden, sodaß sie einen einheitlichen Wirkstoffverbund bilden.

Aus der schematischen Darstellung in Fig.l ist weiters zu ersehen, daß die Kunststoffabfälle 3,4 unterschiedliche Wandstärken bzw. Dicken 11,12 aufweisen können. Bei jenen Kunststoffabfällen 3 bei welchen eine Dicke 11 kleiner ist als 0,5 mm handelt es sich um sogenannte weiche Kunststoffe, während es sich bei den Kunststoffabfällen 4 mit einer Dicke 12 die größer als 0,5 mm ist, um harte Kunststoffe handelt. Dazu kommt, daß die in Fig.l gezeigten Kunststoffabfälle alle einen Fließpunkt bzw. eine Fließtemperatur aufweisen, der oberhalb der Verarbeitungstemperatur liegt und die daher nicht plastifiziert wurden.

Gleichzeitig ist aus dieser schematischen Darstellung gut ersichtlich, daß die einzelnen Kunststoffabfälle 3,4 bzw. Verunreinigungen 5,6 annähernd parallel zu einer Längsrichtung - Pfeil 13 - des Formteils 1 verlaufend ausgerichtet sind. Dadurch bilden sie ein in Längsrichtung des Formteils verlaufendes inneres Verstärkungsgerippe, wodurch sowohl die Biegefestigkeit als auch die Zugfestigkeit derartiger Formteile 1 erhöht wird. Durch die Ausrichtung der nicht plastifizierten Kunststoffabfälle 3,4 in Längsrichtung - Pfeil 13 - des Formteils 1 wird verhindert, daß der Tragkörper 2 im Bereich der Maximalabmessungen der Kunststoffabfälle eine Einschnürrung erfährt, die aufgrund der unterschiedlichen Zustandsänderungen der verschiedenen Kunststoffe bei den Verarbeitungstemperaturen zu keinem Verschmelzen bzw. zu keiner ausreichenden formschlüssigen Verbindung führt. Dadurch wird verhindert, daß es im Bereich dieser Kunststoffabfälle 3,4 bzw. den Kunststoffabfallflocken durch eine zu starke Querschnittseinengung zu Brüchen bei Biege- bzw. Zugbeanspruchungen kommt. Eine Flockengröße, die in der vorliegenden Zeichnung zum besseren Verständnis der Erfindung übertrieben vergrößert dargestellt ist, ist kleiner als 6 mm. Das heißt, daß eine maximale Hauptabmessung 14 nicht größer als 6 mm sein kann. Bevorzugt wird hierbei die maximale Größe also die Hauptabmessung 14 der Kunststoffabfälle 3,4 bzw. der Verunreinigungen 5,6 mit 3 bis 4 mm festgelegt.

Die Ausrichtung der Kunststoffabfälle 3,4 und der Verunreinigungen 5,6 wird dadurch bewirkt, daß das plastifizierte Kunststoffmaterial des Tragkörpers 2 in möglichst kleinen Mengen gut durchgeknetet wird und sich dabei in Förderrichtung der plastifizierten Kunststoffschmelze ausrichten kann. Durch eine entsprechende Führung der plastifizierten Kunststoffschmelze wird erreicht, daß diese Ausrichtung auch im fertigen Formteil 1 noch beibehalten werden kann.

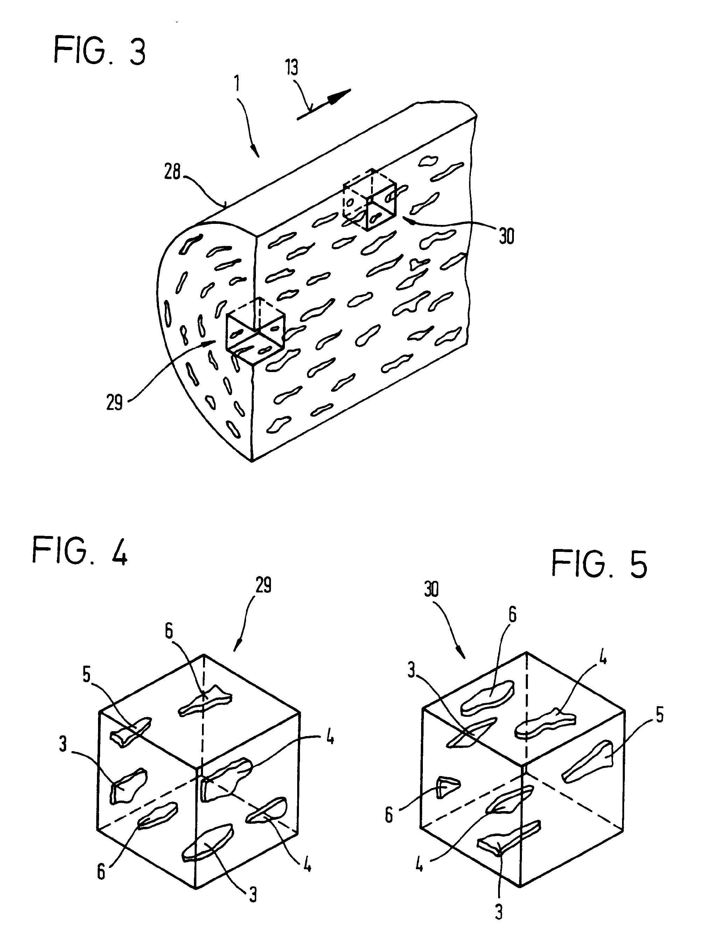

In Fig.2 ist in einem Diagramm der Verlauf des Schubmoduls in Abhängigkeit von der Temperatur für verschiedene Kunststoffe wie Polyolefine 15, z.B. Polypopylen, Hart-PVC 16 und kristallinen Polyäthylenterephtalat (PET) 17 gezeigt. Aus dieser Darstellung ist ersichtlich, daß eine Einfriertemperatur 18 bei PVC 16 beim Erwärmen des PVC auf ca. 80°C und eine Fließtempe- ratur 19 bei ca. 175°C erreicht wird. Im Bereich der Einfriertemperatur 18 bzw. des Einfrierpunktes nimmt, wie aus einer Kennlinie 20 des Diagramms ersichtlich, der Schubmodul stark ab. Bei einer weiteren Erwärmung des PVC's geht der Schubmodul je nach Dotierung, z.B. bei ca. 160°C, gegen Null. Bei ca. 175°C wird dann der Fließpunkt bzw. die Fließtemperatur 19 Glasübergangs- bzw. Schmelztemperatur bezeichnet erreicht. Diese Fließtemperatur entspricht der niedrigsten Extrusionstemperatur. Ab dieser Fließtemperatur 19 befindet sich das PVC in einem plastischen Zustand in dem die Netzwerkstruktur vollständig abgebaut ist und die auch als Schmelztemperatur bezeichnet werden kann. Bei der Erwärmung zwischen der Einfriertemperatur 18 und der Fließtemperatur 19 geht der Kunststoff von einem gummielastischen immer mehr in einen weichgummiarti- gen Zustand über.

Wie weiters Kennlinien 21,22 im Vergleich zu der Kennlinie 20 des PVC 16 zeigen, wird beispielsweise bei Polyolefinen 15, z.B. Polypropylen eine Einfriertemperatur 23 bereits bei ca. 0°C erreicht, während eine Fließtemperatur 24 dieses Kunststoffes bei ca. 164°C liegt und der Schubmodul ab ca. 15°C nicht mehr meßbar ist. Deutlich davon unterscheidet sich jedoch die Kennlinie 22 des Polyäthylenterephtalates 17, da bei diesem Kunststoff beispielsweise eine Einfriertemperatur 25 bei ca. 80°C überschritten wird und die Fließtemperatur 26 bei ca. 327°C gegebenenfalls auch noch bei höheren Temperaturen überschritten wird.

Wie der Gegenüberstellung der Kennlinien 20,21 und 22 somit zu entnehmen ist, befinden sich jene Kunststoffabfälle 3,4 aus Polyäthylenterephtalat bei einer Verarbeitungstemperatur zwischen ca. 150°C und 210°C erst in ihren gummielastischen Zustand, während sich nahezu alle anderen Materialien wie PVC 16 und Polyolefine 15 bereits in ihrem plastischen Zustand befinden und ein viskoses Fließen eingesetzt hat. Damit können sich jene Kunststoffabfälle, die zwar noch nicht plastifiziert sind an ihrer Oberfläche jedoch zumindest bereits den gummielastischen Zustand erreicht haben, mit den plastifizierten Kunststoffen, die einen erheblich niederen Fließpunkt bzw. eine Fließtemperatur 19 bzw. 24 aufweisen, oberflächlich verschweißen bzw. verkleben und es ist dadurch eine Kraftübertragung im mehr oder weniger starken Ausmaß möglich.

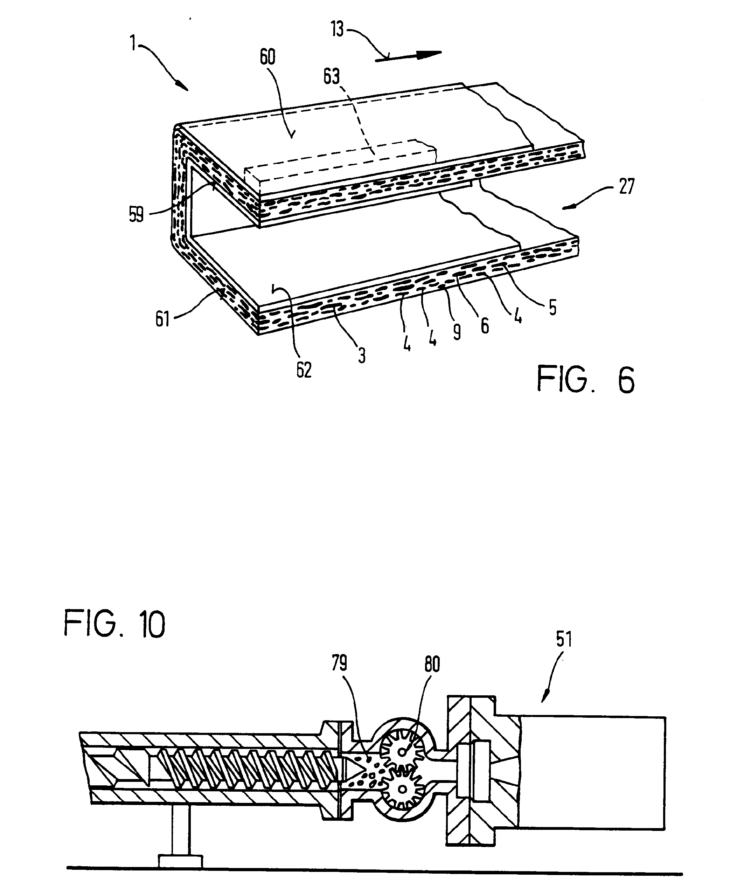

In den Fig.3 bis 6 sind aus Kunststoffabfällen hergestellte Formteile 1 in Fig.6 ein U-Profil 27 und in Fig.3 ein Rundstangenprofil 28 dargestellt.

Wie aus diesen schematischen Darstellungen insbesondere im Bereich der Schnittfläche des Rundstangenprofils 28 und im Bereich der Stirnkanten des U-Profils 27 zu ersehen ist, sind die Kunststoffabfälle 3,4 bzw. die mineralischen und metallischen Verunreinigungen 5,6 mit ihrer Hauptabmessung bzw. Längsabmessung in Längsrichtung - Pfeil 13 - des Formteiles 1 ausgerichtet. Von Vorteil ist es bei den erfindungsgemäßen Formteilen 1 aber auch weiters, daß die Verteilung dieser Kunststoffabfälle 3,4 und der Verunreinigungen 5,6 die bei der Plastifizierung der gesamten Kunststoffabfälle, beispielsweise aus dem Hausmüll, nicht aufgeschmolzen werden können, über den gesamten Querschnitt des U-Profils 27 bzw. des Rundstangenprofils 28 im wesentlichen gleichmäßig verteilt sind.

Dies bedeutet, daß, wie dies in Fig.3 zum besseren Verständnis schematisch dargestellt ist, das Volumen der nicht plastifizierten Kunststoffabfälle 3,4 und Verunreinigungen 5,6 in einem Prüfkörper 29 der in einem Mittelbereich des Rundstangenprofils 28 entnommen wird zumindest 50 % des Volumens derartiger Kunststoffabfälle 3,4 bzw. Verunreinigungen 5,6 eines Prüfkörpers 30 entspricht, der ein gleiches Volumen wie der Prüfkörper 29 aufweist. Je nach dem Verwendungszweck der Formteile 1 kann nun durch entsprechende Aufteilung der Kunststoffschmelze in mehrere verschiedenartig geformte Schmelzestränge innerhalb der Düse bzw. der Extrusionsvorrichtung die Menge der nicht aufgeschmolzenen Kunststoffabfälle 3,4 bzw. der Verunreinigungen 5,6, also der Einschlüsse in den während der Herstellung der Formteile 1 aufgeschmolzenen bzw. plastifizierten Kunststoffabfällen, verändert werden.

Um diese Prüfkörper und die Verteilung der nicht aufgeschmolzenen Kunststoffabfälle 3,4 und Verunreinigungen 5,6 besser zu zeigen, sind in den Fig.4 und 5 die beiden Prüfkörper in größerem Maßstab dargestellt. Wie ersichtlich und schematisch eingezeichnet, befinden sich bei diesem Prüfkörper 29,30 nicht plastifizierte Kunststoffabfälle 3,4 und Verunreinigungen 5,6 in nahezu dem gleichen Volumen.

Dadurch wird unter anderem auch verhindert, daß über den Querschnitt von aus derartigen Kunststoffabfällen hergestellten Formteilen 1 stark unterschiedliche Festigkeitswerte betreffend die Zugfestigkeit und die Biegefestigkeit entstehen.

Ansich ist es möglich, daß beispielsweise in jenem Prüfkörper 29, der aus den Mittelbereich des Rundstangenprofils 28 entnommen wurde, ein größerer Anteil solcher nicht plastifizierter Kunststoffabfälle 3,4 bzw. Verunreinigungen 5,6 enthalten ist, da dieser Bereich in diesem Vollprofil die neutrale Zone bildet, die weniger beansprucht ist. Da bei der Verarbeitung von Hausmüll, die ein besonders bevorzugtes Anwendungsgebiet der vorliegenden Erfindung darstellt, eine gewisse durchschnittliche Mischung von verschiedenen Kunststoffen enthalten ist, die nur mit sehr hohem Aufwand geändert werden könnte, ist es günstiger, diese über den Profilquerschnitt in etwa gleich zu verteilen, sodaß Überfüllungen und damit Zonen mit wesentlich geringerer Beanspruchbarkeit verhindert werden.

Ist es jedoch aufgrund der gewünschten Festigkeitseigenschaften eines aus derartigen Recyclingkunststoffen hergestellten Profils wünschenswert, daß in den höher beanspruchten Randzonen ein etwas geringerer Anteil von nicht plastifizierten Kunststoffabfällen 3,4 bzw. Verunreinigungen 5,6 enthalten sein soll, so kann dies dadurch erreicht werden, daß ein höherer Prozentsatz dieser Stoffe gezielt in den Kernbereich der Profile verbracht wird.

Selbstverständlich verhält sich die Aufteilung bzw. die unterschiedlichen Volumina der eingeschlossenen nicht plastifizierten Abfallkunststoffe und Verunreinigungen in den Schenkeln bzw. in der Basis des U-Profils 27 nach Fig.6 ähnlich oder sogar gleich dem im Rundstangenprofil 28. Entnimmt man bei diesem U-Profil 27 aus einem Schenkel oder der Basis entsprechend kleiner dimensionierte Prüfkörper aus dem Mittelbereich und aus dem Bereich der Oberfläche, so ergibt sich in etwa das gleiche Verhältnis zwischen dem Volumen der in diesen Prüfkörpern eingeschweißten bzw. eingebetteten nicht plastifizierten Kunststoffabfälle 3,4 bzw. Verunreinigungen 5,6.

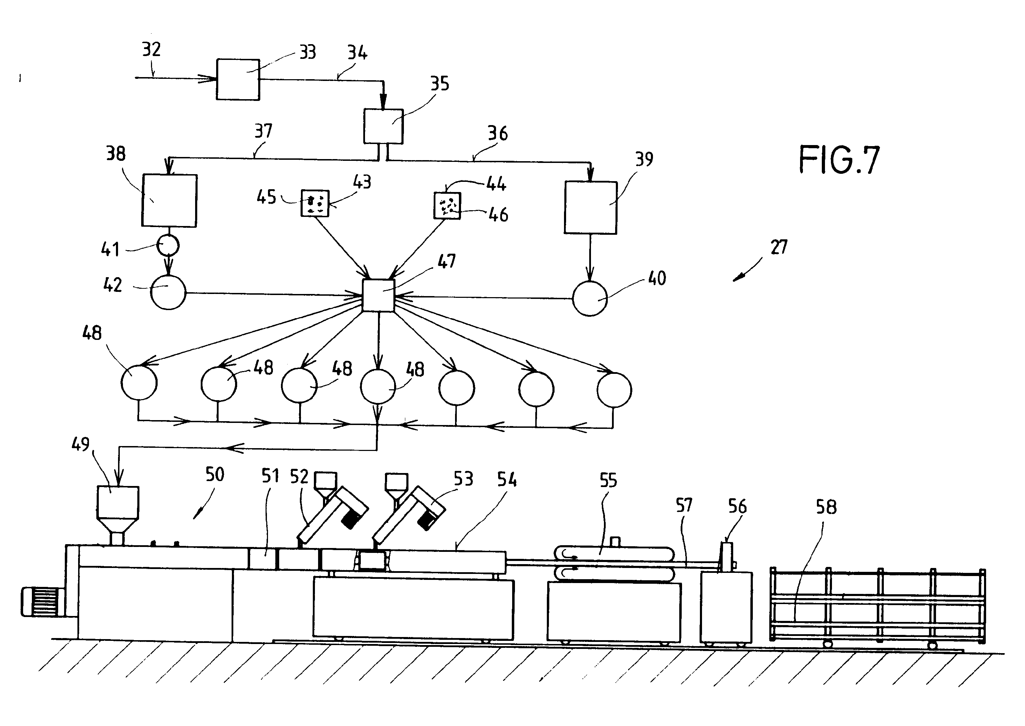

In Fig.7 ist eine Einrichtung 31 gezeigt, mit der Formteile 1 nach dem erfindungsgemäßen Verfahren hergestellt werden können.

Das Verfahren läuft derart ab, daß aus einem angelieferten Hausmüll 32 in einer Vorsortieranlage 33 die wiederverwertbaren Kunststoffabfälle 34 ausgeschieden werden. Diese werden einer Trennvorrichtung 35 zugeführt, in welcher die Kunststoffabfälle 34 falls gewünscht gewaschen und danach in harte und weiche Kunststoffe 36,37 aufgeteilt werden. Dies kann beispielsweise durch eine Schwerkrafttrennung im Wasser erfolgen. Die harten Kunststoffe 36 werden ebenso wie die weichen Kunststoffe 37 Mühlen 38,39 zugeführt, in welchen sie auf eine Flockengröße von kleiner 6 mm verarbeitet werden. Die harten Abfälle gelangen dann direkt in einen Zwischenspeicher 40 während die weichen Kunststoffe 37 über einen Verdichter 41 einem Zwischenspeicher 42 zugeführt werden. Desweiteren sind noch Speicherbehälter 43,44 zur Aufnahme von Zuschlagstoffen 45 und Füllsmitteln 46 vorgesehen. Diese Zuschlagstoffe 45 können beispielsweise durch Hitzestabilisatoren, Lichtstabilisatoren, Flammhemmstoffe oder Oxidationshemmstoffe gebildet sein. Es ist aber auch möglich als Zuschlagstoffe Farbstoffe und UV-Absorber oder Antistatikmittel einzusetzen. Als Füllstoffe können vor allem Holzmehl bzw. Kalziumverbindungen, z.B. Kreide oder Talg, verwendet werden.

Obwohl im vorliegenden Ausführungsbeispiel nur zwei Speicherbehälter 43 und 44 für Zuschlagstoffe 45 und Füllmittel 46 dargestellt sind, so ist es im Rahmen der Erfindung selbstverständlich möglich, mehrere derartige Speicherbehälter 43 mit unterschiedlichen Zuschlagstoffen bzw. mehrere Speicherbehälter 44 mit unterschiedlichen Füllmaterialien einzusetzen bzw. zu verwenden. Dadurch ist es möglich, eine beliebige Mischung und Veränderung der Eigenschaften des Kunststoffes zu erzielen.

Je nach dem gewünschten Mischungsverhältnis der einzelnen Bestandteile werden diese dann über eine Wägevorrichtung 47 Lagerbehältern 48 zugeführt. Aus diesen werden die vorbereiteten Rohstoffmengen einer Einfüllvorrichtung 49 eines Extruders 50 zugeführt. Der plastifizierte Kunststoff gelangt dann durch eine Düse 51 zu einem weiteren Extruder 52 mit welchem beispielsweise eine Deckschicht aus reinem Kunststoff mit genau vordefinierten Eigenschaften aufgebracht werden kann. Handelt es sich um einen komplizierteren Bauteil der beispielsweise mehrfarbig sein muß, bzw. unterschiedlichen Beanspruchungen auf unterschiedlichen Seitenprofile ausgesetzt ist, so kann diesem Extruder 52 ein weiterer Extruder 53 nachgeschaltet sein, mit welchen in unterschiedlichen Bereichen oder auch in Bereichen, in welchen bereits mit dem Extruder 52 eine Zusatzschicht aufgebracht wurde, eine weitere Zusatzschicht aufgebracht werden kann. Daran anschließend werden die Formteile in einer Kühl- und Kalibriervorrichtung 54 auf ihren endgültigen Querschnitt verformt und durchlaufen einen Raupenabzug 55. Mit einer Säge 56 kann der Formteil 57 der endlos extrudiert wird, auf Profile 58 mit vorbestimmbaren Längen abgelängt werden.

In Fig.6 wurde schematisch angedeutet wie beispielsweise mit dem Extruder 52 auf einem Schenkel 59 des U-Profils 27 in Fig.6 eine Deckschicht 60 aufgebracht werden kann. Diese Deckschicht 60 kann dazu dienen, um ein zusätzliches Zugband herzustellen und damit die Zug- und Biegebeanspruchbarkeit des U-Profils 27 entsprechend zu erhöhen. Andererseits kann die Deckschicht aber ausschließlich oder zusätzlich auch aus optischen Gründen vorgesehen sein, um eine beliebige Farbwahl und eine durchgehend glatte Oberfläche zu ermöglichen. So ist es unter Umständen auch weiters möglich, daß diese Deckschicht 60 den gesamten Außenumfang des U-Profils 27 abdeckt. Desweiteren kann beispielsweise mit dem Extruder 53 auf einer Innenseite, also auf den einander zugewandten Oberflächen der Schenkeln 59 und 61 eine Deckschicht 62 mit dem Extruder 53 aufgebracht werden. Es ist aber ebenso möglich, wie schematisch mit strichlierten Linien im Bereich der Deckschicht 60 angedeutet, auch die Deckschicht 60 oder über einen Teil dieser Deckschicht 60 mit dem Extruder 53 eine weitere Verstärkungsschicht 63 aufzubringen, die entsprechende Eigenschaften, wie gute Gleitfähigkeit oder partielle Verstärkung gegen Verformungen ermöglicht.

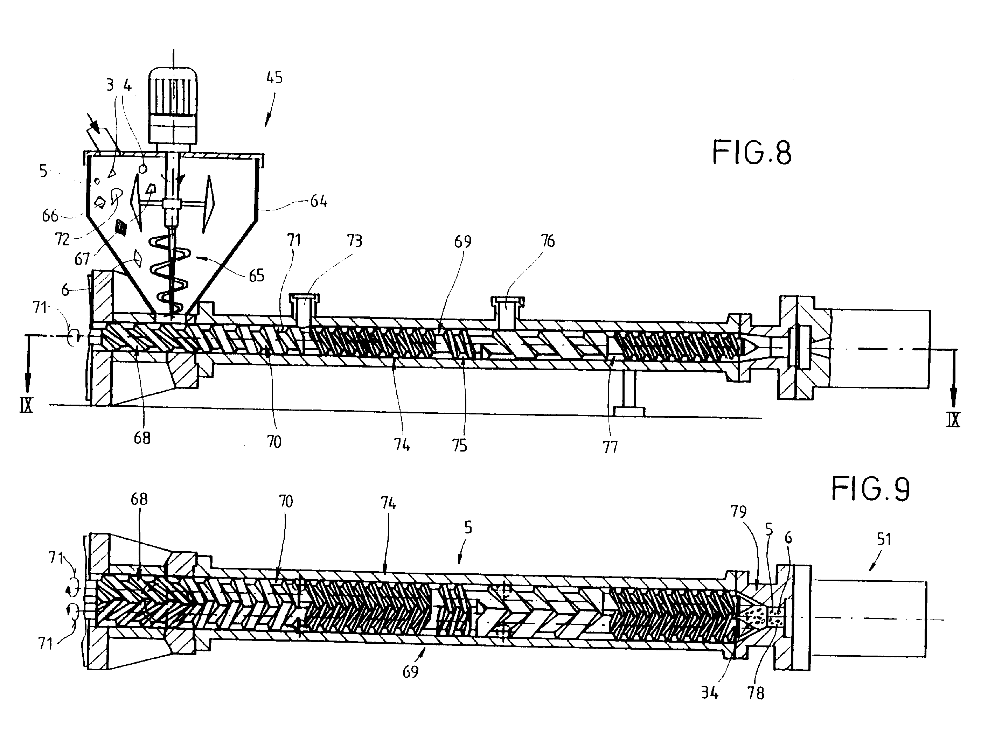

In den Fig.8 und 9 ist der Extruder 50 zum Herstellen der Formteile 1 in größerem Maßstab und teilweise geschnitten dargestellt.

Wie ersichtlich umfaßt die dem Extruder vorgeordnete Einfüllvorrichtung 49 einen Aufnahmebehälter 64, in dem eine Förderschnecke 65 vorgesehen ist, in die die Mischung aus den Kunststoffabfällen 3,4,66,67, die zum besseren Verständnis schematisch durch unterschiedliche geometrische Formen dargestellt sind, eingebracht werden. So besteht das Gemisch aus den Altkunststoffen durch Kunststoffabfälle 3,4 mit Wandstärken von kleiner bzw. größer als 0,5 mm und einem Fließpunkt oberhalb der Verarbeitungstemperatur, so wie Kunststoffabfällen 66,67 von welchen die Kunststoffabfälle 66 eine Wandstärke unter 0,5 mm und jene der Kunststoffabfälle 67 eine Wandstärke über 0,5 mm aufweisen. Diese Kunststoffabfälle 66 und 67 weisen jedoch einen Fließpunkt bzw. eine Fließtemperatur auf, die innerhalb des Verarbeitungsbereiches von ca. 150°C bis 210°C liegt. Wie man aus der schematischen Darstellung ersehen kann, überwiegt der Anteil an Kunststoffabfällen 66 und 67 deutlich gegenüber der Masse bzw. dem Volumen der Kunststoffabfälle 3 und 4. Zwischen diesen verschiedenen Kunststoffabfällen 3,4 und 66,67 befinden sich dann noch Verunreinigungen 5 bzw. 6 aus organischen bzw. mineralischen Materialien. Dieses Gemisch aus Kunststoffabfällen wie es beispielsweise aus der Hausmüllaufarbeitung bzw. Trennung oder aus Gewerbemüll oder aus verschiedenen gesammelten Kunststoffen zugeführt wird, wird in einen Einzugsbereich 68 einer durch eine Schnecke 69 gebildeten Plastifiziervorrichtung eingezogen. In einer Vorverdichtungs- zone 70 wird durch das Vorwärtsdrücken und Kneten sowie die Reibung zwischen der entsprechend Pfeilen 13 rotierenden Schnecken 69 eine Verdichtung und Erwärmung der Kunststoffab- fälle 3,4 bzw. 66,67 und der Verunreinigungen 5,6 vorgenommen. In dieser Vorverdichtungszone 70 wird ein Kunststoffgemenge 71 auf eine Temperatur von etwa 100°C erhitzt, sodaß schematisch durch Tropfen 72 im Aufnahmebehälter 64 angedeutete Feuchtigkeit verdampft.

Diese bei der Erhitzung auf etwa 100°C entstehenden Dämpfe werden durch einen Entgasungsauslaß 73 in die Atmosphäre ausgetragen. Daran anschließend erfolgt in einer Zwischenverdichtungszone 74 ein Erhitzen des Kunststoffgemenges 71 auf eine Temperatur von ca. 140°C. Dies erfolgt wiederum dadurch, daß das Kunststoffgemenge durch die gegensinnig rotierenden und wie besser aus Fig.9 ersichtlich nebeneinander angeordneten und miteinander in Eingriff stehenden zwei Schnecken 69 geknetet und gepreßt wird bzw. durch externe Wärmezufuhr über den die Schnecken 69 aufnehmenden Zylinder. An diese Zwischenverdichtungszone 74 schließt sich eine Entspannungszone 75 an, in der der Druck durch relativ breite Schneckengänge abgesenkt wird, sodaß aus dem Kunststoffgemenge darin angesammelte Gase austreten können. Diese Gase werden durch einen weiteren Entgasungsauslaß 76 abgeführt und gegebenenfalls nach entsprechender Filterung an die freie Atmosphäre abgegeben. Danach erfolgt in der Plastifizierungszone 77 eine weitere Erhitzung und Durchmischung des Kunststoffgemenges und es liegt am Ende der beiden Schnecken 69 im Bereich einer Förderöffnung 78 zu einer Düse 51 eine Kunststoffschmelze 79 vor, in der die nicht plastifizierten bzw. geschmolzenen Kunststoffabfälle 3,4 bzw. Verunreinigungen 5,6 enthalten sind. Da entsprechend den unterschiedlichen Einzugsbedingungen eine vollkommene Homogenisierung bei derartigen Kunststoffgemischen aus Kunststoffabfällen nicht immer sichergestellt werden kann, kann es zu Homogenitätsunterschieden bzw. Dichteunterschieden in der Kunststoffschmelze 79 kommen.

Ist eine entsprechend gleichbleibende Zusammensetzung der Kunststoffabfälle wie beispielsweise bei der Wiederverwertung von in Kunststoffproduktionen angefallenen Abfallmaterialien möglich, so kann die Kunststoffschmelze 79 direkt in die Düse 51 eingebracht werden.

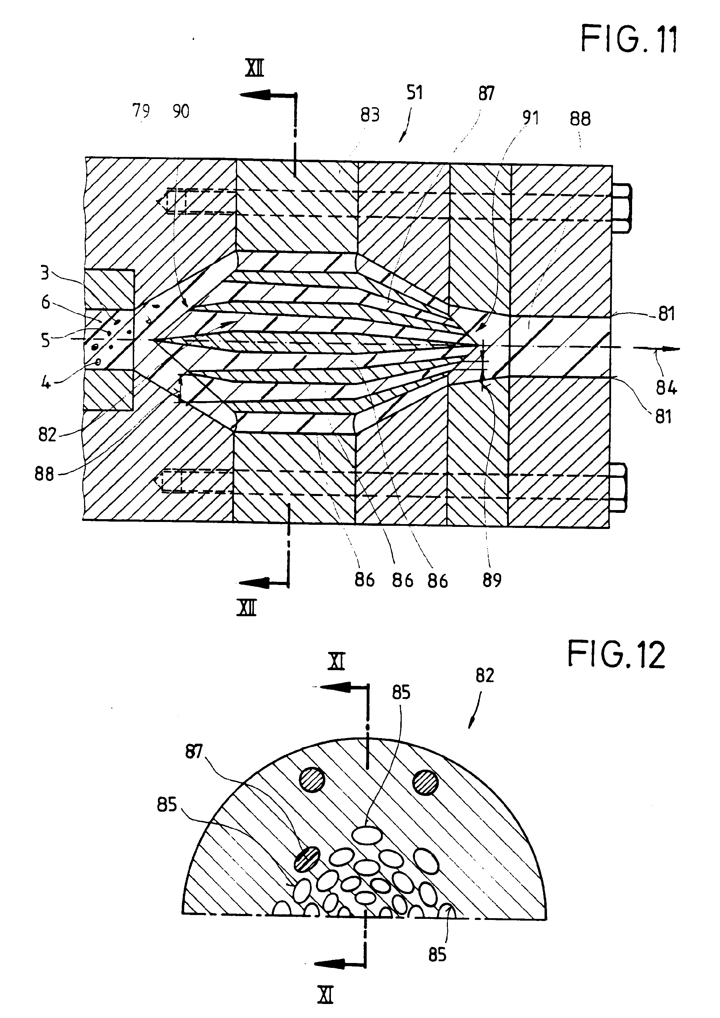

Wie in Fig.10 gezeigt, ist es aber auch möglich, zur Einhaltung einer gleichbleibenden Dicke und einer ausreichenden Homogenisierung der Kunststoffschmelze 79 mit den durch die nicht plastifizierten Kunststoffabfällen 3,4 bzw. den Verunreinigungen 5,6 gebildeten Einschlüssen eine beispielsweise durch eine Zahnradpumpe gebildete Schmelzpumpe 80 der Förderöffnung 78 nachzuordnen, die sicherstellt, daß ein gleichbleibendes Volumen an Kunststoffschmelze 79 mit gleichbleibendem Druck der Düse 51 zugeführt wird. Bei dieser Düse 51 kann es sich um eine Massiv- oder Hohlkammerprofildüse handeln. Diese Düse kann also zur Herstellung von Vollprofilen, wie in Fig.3 gezeigt, oder zur Herstellung von gekrümmten Profilen, beispielsweise U-Profilen, wie in Fig.6 gezeigt oder zur Herstellung von Hohlprofilen mit innenliegenden Verstärkungsstegen oder dgl. ausgebildet sein.

In den Fig.ll und 12 ist eine Düsenlippen 81 einer Düse 51 vorgeschaltete Mischvorrichtung 82 für die über die Förderöffnung 78 zugeführte Kunststoffschmelze 79 in der die Einschlüsse bildenden Verunreinigungen 5,6 bzw. nicht plastifizierten Kunststoffabfälle 3,4 schematisch durch Punkte bzw. durch Kreise angedeutet sind, vorgesehen. Diese Mischvorrichtung 82 besteht beispielsweise aus einer Düsenplatte 83, in der über die gesamte Fläche senkrecht zu einer Extrusionsrichtung - Pfeil 84 - und wie besser aus Fig.12 ersichtlich beispielsweise in konzen- trischen Kreisen angeordnete Düsenbohrungen 85 mit unterschiedlichen Öffnungsquerschnitt angeordnet sind.

Durch diese Aufteilung der Kunststoffschmelze in eine Vielzahl von im wesentlichen parallel zueinander verlaufenden Schmelzesträngen 86,87 wird über den gesamten Querschnitt der Kunststoffschmelze 79 eine Vermischung erreicht. Während üblicherweise bei der Herstellung von Hohl- oder Vollprofilen eine zu starke Aufteilung der Kunststoffschmelze 79 in zuviele Schmelzestränge 86,87 tunlichst vermieden wird, um durch das nachfolgende Verschweißen der Schmelzestränge zu einem einheitlichen Schmelzestrom bzw. beim Umformen in eine Schmelzebahn für die Herstellung eines U-Profils 27 zu vermeiden, erweist sich diese Aufteilung der Kunststoffschmelze 79 in eine Vielzahl von Schmelzesträngen 86,87 mit unterschiedlichen Querschnitt für die Verarbeitung von Kunststoffabfällen insbesondere aus Hausmüll oder Gewerbemüll als eine vorteilhafte Ausführungsvariante. Dadurch werden die plastifizierten Kunststoffabfälle mit den nicht plastifizierten Kunststoffabfällen bzw. Verunreinigungen intensiver durchmischt und dadurch kann eine gleichmäßigere Verteilung und vor allem eine Ausrichtung mit ihrer Längsabmessung in Längsrichtung des Profils bzw. der Extrusionsrichtung - Pfeil 84 - mit größerer Sicherheit erreicht werden.

Als vorteilhaft kann es sich hierbei auch erweisen, wenn eine Querschnittsfläche bzw. eine Öffnungsweite 88 sich in Extrusionsrichtung - Pfeil 84 - auf eine Öffnungsweite 89 reduziert, oder gegebenenfalls diese Öffnungsweite 88,89 über die Länge der Düsenbohrungen 85 mehrere Einschnürungen aufweist. All dies trägt zur besseren Ausrichtung bzw. Vermischung der Einschlüsse wie der Verunreinigungen 5,6 und der nicht plastifizierten Kunststoffabfälle 3,4 in dem Tragkörper 2 aus den plastifizierten Kunststoffabfällen 66,67 bei.

Ein Einlaßbereich 90 und ein Auslaßbereich 91 können überdies konisch bzw. kegelförmig ausgebildet sein, um das Fließen der Kunststoffschmelze 79 durch die Mischvorrichtung 82 zu verbessern. Im Auslaßbereich 91 bzw. unmittelbar anschließend daran werden die einzelnen Schmelzestränge 86,87 wieder zu einem homogenen Schmelzestrom 92 vereinigt. Dieser kann bei Vollprofilen mit zylindrischen Querschnitt direkt über die Düsenlippen 81 ausgetragen oder beispielsweise bei Hohlprofilen oder Profilen mit räumlich gekrümmten Querschnitt, wie beispielsweise U-Profilen 27, zu einer Schmelzebahn beliebiger Form verformt werden.

Die hierfür notwendigen Ausbildungen der Düsen sind aus dem Stand der Technik in verschiedenen Ausführungsformen bekannt und können diese in Verbindung mit den beschriebenen Vorrichtungen zur Durchführung des erfindungsgemäßen Verfahrens und zum Herstellen von erfindungsgemäßen Formteilen in gleicher Weise verwendet werden.

Selbstverständlich erfolgt im Zuge der Plastifizierung bzw. Homogenisierung der Kunststoffabfälle im Extruder 50 auch eine entsprechende Beheizung und bzw. oder Kühlung der die Schnecken 69 aufnehmenden Zylinder bzw. Zylinderwandungen, sodaß die jeweils gewünschten Temperaturen über den Längsverlauf der Schnecken 69 aufgebracht werden können. Die Art der Temperaturaufbringung bzw. deren Regelung und Steuerung sowie die Abstimmung der einzelnen Drucke kann entsprechend den aus dem Stand der Technik bekannten Verfahren vorgenommen werden.

Wie in Fig.1 weiters angedeutet ist, ist es auch möglich, den Formteil 1 zusätzlich durch das Einbringen von fadenartigen Verstärkungselementen 95 zu verstärken. Diese können beispielsweise durch Keramik-, Kevlar-, Karbon- oder Metallfäden gebildet sein. Diese Verstärkungselemente bzw. die Fäden können als Gewirk oder Netz ausgebildet sein, es ist aber andererseits auch möglich über den Querschnitt des Formteils verteilt angeordnet, mehrere Verstärkungselemente vorzusehen, die untereinander verbunden werden.

So ist es auch möglich, die Verstärkungselemente 95 bzw. die Fäden 96 im Bereich der Oberflächen eines Profils anzuordnen, um die Tragfähigkeit bzw. die Biegefestigkeit desselben zu erhöhen. Werden demgegenüber kurze Fasern 97 verwendet, die in unterschiedlichen Raumrichtungen im Formteil 1 angeordnet sind, so wird vielfach eine Versteifung des Formteils in unterschiedlichen Raumrichtungen erreicht.

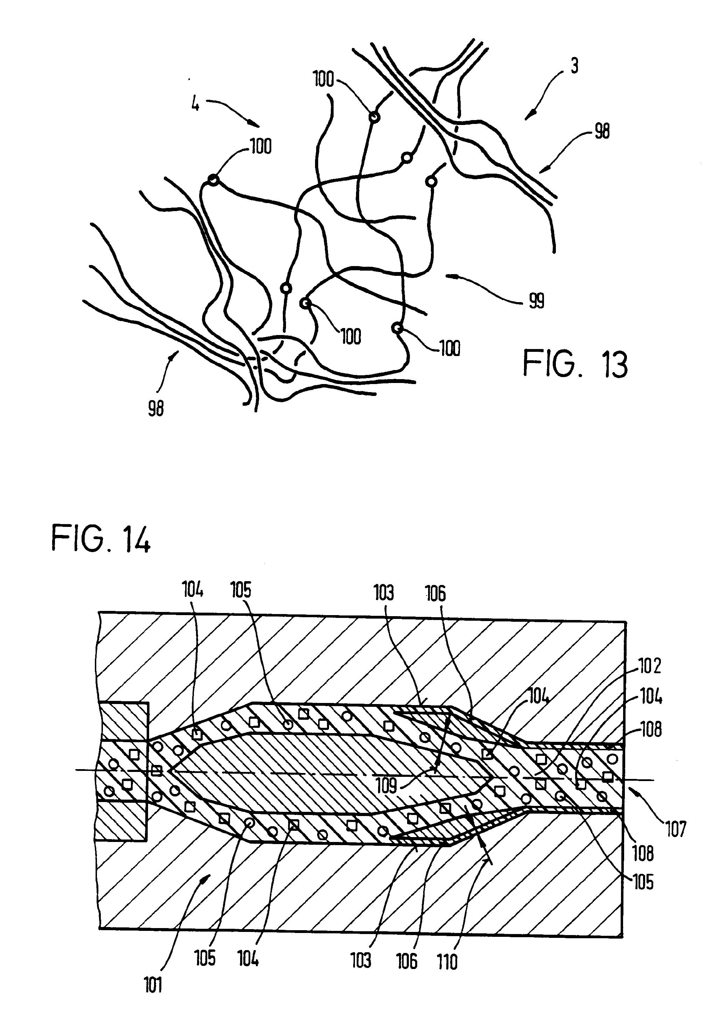

Wie in Fig.13 gezeigt, ist gemäß einer insbesondere auch eigen- ständigen erfindungsgemäßen Ausbildung eine Kettenverbindung zwischen den Polymerketten 98,99 der Kunststoffe unterschiedlichen Polymerketten der aufgeschmolzenen Kunststoffabfälle 3 bzw. 4 über ein eigenes Polymermaterial 100 möglich.

Dieses zusätzliche Polymermaterial 100, welches auch als Haftvermittler bezeichnet werden könnte, kann eine chemische Verbindung zwischen den unterschiedlichen Polymerketten 98,99 der Kunststoffabfälle 3,4 herstellen.

Der Vorteil des Einsatzes von derartigen Haftvermittlern liegt darin, daß die unterschiedlichen Arten der in dem Formteil 1,57 vorhandenen Kunststoffe nicht nebeneinander liegende Tragge- rüste bilden, die auf Scherung beansprucht sind, sondern einen einheitlich miteinander vernetzten Tragkörper, der dementsprechend auch erheblich höher belastbar ist, herstellen.

So ist es unter anderem auch möglich, daß die Polymerketten 98,99 durch amorphe bzw. kristalline Fadenmoleküle gebildet werden können. Derartige kristalline bzw. teilkristaline Thermoplaste können beispielsweise durch Polypropylen, Polyamide oder Polyethylene gebildet sein. Die amorphen Thermoplaste wiederum können durch ABS, Polykarbonate oder Polysulfone gebildet sein.

Es ist aber auch möglich, daß die Polymerketten durch Elastomere oder thermoplastische Elastomere gebildet sind. Über entsprechende Haftvermittler bzw. ein zusätzliches Polymermaterial 95 ist es auch möglich, diese Stoffe chemisch miteinander zu verbinden.

Dadurch kommt es, wie bereits vorstehend aufgezeigt, zu einer chemischen Verbindung zwischen den einzelnen Polymerketten und werden diese nicht nur durch Adhäsion bzw. physikalische Kräfte aneinander gehalten.

Unter anderem ist es aber auch möglich, zur verbesserten Oberflächengestaltung von aus derartigen Recycling-Materialien hergestellten Produkten zumindest die beim Einsatz für den Betrachter ersichtlichen Oberflächen möglichst glatt auszubilden.

Dazu kann der Formteil als Sandwichteil ausgebildet werden, wobei eine oder mehrere durch Kernteile voneinander getrennte Deckschichten den einen Großteil der nicht schmelzbaren Verunreinigungen aufnehmenden Kern umgeben.

Diese optischen Deckschichten können durch eine Koextrusion durch Aufextrudieren von reinem Grundmaterial hergestellt werden.

Es ist aber auch, wie in Fig.14 gezeigt, ebenso möglich, in der Düse 101 zum Hauptkanal 102 parallel verlaufende Nebenkanäle 103 anzuordnen, die einen so geringen Querschnitt aufweisen, daß Verunreinigungen 104 bzw. nicht aufgeschmolzene Kunststoffmaterialen bzw. -abfälle 105 diese nicht passieren können. Die derart abgeschiedenen, von Verunreinigungen 104 bzw. nicht aufgeschmolzenen Kunststoffmaterialien bzw. -abfälle 105 befreiten und plastifizierten und durch den Nebenkanal 103 transportierten Kunststoffteilmengen 106, können über die abzudeckenden Kernteile 107 des Profils als Deckschicht 108 aufgebracht werden. Dadurch ist es möglich, ohne Zuführen eines weiteren Materials über einen eigenen Extruder einen Sandwichaufbau bei derartigen Formteilen 1,57 herzustellen.

Die Absonderung der nicht aufgeschmolzenen Kunststoffteilchen sowie der Verunreinigungen gelingt durch die Auslegung der Parallel- bzw. Nebenkanäle 103 mit einem gegenüber dem Querschnitt 109 des Hauptkanals 102 erheblich geringem Querschnitt 109, sodaß aufgrund des erhöhten Eintrittswiderstandes größere Verunreinigungen 104 bzw. nicht aufgeschmolzene Kunststoffmaterialien bzw. -abfälle 105 durch den Hauptkanal 102 mit geringerem Strömungsquerschnitt austreten und somit zum Bilden des Zentralteils bzw. Kernteils 107 des Profils herangezogen werden können. Selbstverständlich ist es auch möglich, daß die Deckschichten 108 auf der Innen- und Außenseite der Profile oder nur auf einzelnen Oberflächen oder als Streifen auf diesen Oberflächen hergestellt werden können.

## Patentansprüche

1. Formteil (1,57) aus gespritzten oder extrudierten Kunststoffteilen mit darin enthaltenen KunststofTabfällen (3,4), die einen Fließpunkt aufweisen, der höner ist als eine maximale Verarbeitungstemperatur des Formteils (1,57) und diese im Formteil (1,57) verteilt eingeschweißt und bzw. oder eingebettet sind mit einer Flockengröße von kleiner 6 mm, dadurch gekennzeichnet, daß die Kunststoffabfälle (3,4,66,67) zu mehr als 50 % des Volumens des Formteils (1,57) einen Fließpunkt von über 80°C aufweisen und eine Teilmenge eine Wandstärke bzw. Dicke (12) größer als 0,5 mm und eine weitere Teilmenge eine Wandstärke bzw. Dicke (11) kleiner als 0,5 mm aufweist und diese mit organischen und bzw. oder mineralischen Verunreinigungen (5,6) versehen sind und zumindest bei einem Teil der Kunststoffabfälle (3,4) bis zu maximal 70 % des Volumens des Formteils (1,57) ein Fließpunkt höher ist als die maximale Verarbeitungstemperatur, und diese sowie die organischen und bzw. oder mineralischen Verunreinigungen (5,6) im Formteil (1,57) verteilt eingeschweißt und bzw. oder eingebettet sind.

2. Formteil nach Anspruch 1, dadurch gekennzeichnet, daß eine Hauptabmessung (14) der Flocken der Kunststoffabfälle (3,4) mit einem Fließpunkt über der Verarbeitungstemperatur und bzw. oder der organischen bzw. mineralischen Verunreinigungen (5,6) überwiegend in etwa parallel zu einer Fließrichtung - Pfeil (84) - einer Kunststoffschmelze des Formteils (1,57) und bzw. oder einer Längserstreckung - Pfeil (13) - des Formteils (1,57) verläuft.

3. Formteil nach Anspruch 1 oder 2, dadurch gekennzeichnet, daß der Volumsanteil der Kunststoffabfälle (4) mit einer Dicke (12) größer als 0,5 mm und einem Fließpunkt über der Verarbeitungstemperatur, vorzugsweise von über 250°C kleiner als 30 % des Formteilvolumens ist.

4. Formteil nach einem oder mehreren der Ansprüche 1 bis 3, dadurch gekennzeichnet, daß der Volumsanteil an Kunststoffabfällen (3) mit einer Dicke (11) von kleiner als 0,5 mm und einem Fließpunkt über der Verarbeitungstemperatur, vorzugsweise von 250°C kleiner ist als 50 % des Volumens des Formteils.

5. Formteil nach einem oder mehreren der Ansprüche 1 bis 4, dadurch gekennzeichnet, daß die in den Formteilen (1,57) eingebetteten Flocken der Kunststoffabfälle (3,4) und bzw. oder die organischen bzw. mineralischen Verunreinigungen (5,6) in allen Raumrichtungen über den Formteil (1,57) annähernd gleichmäßig verteilt angeordnet sind.

6. Formteil nach einem oder menreren der Ansprüche 1 bis 5, dadurch gekennzeichnet, daß ein Volumsanteil der Flocken des Kunststoffabfalls (3,4) mit einem ließpunkt über der Verarbeitungstemperatur eines einer Oberfläche des Formteils (1,57) unmittelbar benachbarten Volumsbereiches, z.B. eines Prüfkörpers (30) größer ist als 50 % des Volumsanteils der Flocken des Kunststoffabfalls (3,4) in einem von der Oberfläche des Formteils (1,57) distanziert angeordneten Volumsbereich, z.B. eines Prüfkörpers (30), desselben.

7. Formteil nach einem oder mehreren der Ansprüche 1 bis 6, dadurch gekennzeichnet, daß ein Volumen der Flocken der Kunststoffabfälle (3,4) mit einem Fließpunkt oberhalb der Verarbeitungstemperatur und bzw. oder der organischen bzw. mineralischen Verunreinigungen (5,6) maximal 70 % des Volumens des Formteils (1,57) beträgt.

8. Formteil nach einem oder mehreren der Ansprüche 1 bis 7, dadurch gekennzeichnet, daß von dem Volumsanteil der Kunststoffabfälle (3,4), deren Fließpunkt über der Verarbeitungstemperatur des Formteils (1) liegt, maximal 30 % des Volumens durch Flocken (7,10) mit einer Wandstärke bzw. Dicke (12) von größer als 0,5 mm gebildet ist.

9. Formteil nach einem oder mehreren der Ansprüche 1 bis 8, dadurch gekennzeichnet, daß die Kunststoffabfälle (3,4) mit einem Hitzestabilisator und bzw. oder einem Lichtstabilisator versetzt sind.

10. Formteil nach einem oder mehreren der Ansprüche 1 bis 9, dadurch gekennzeichnet, daß die Kunststoffabfälle (3,4) mit einem Flammhemmstoff und bzw. oder einem Oxydationshemmstoff versetzt sind.

11. Formteil nach einem oder mehreren der Ansprüche 1 bis 10, dadurch gekennzeichnet, daß den Kunststoffabfällen (3,4) ein Farbstoff und bzw. oder ein UV-Absorber oder ein Antistatikmittel zugesetzt ist.

12. Formteil nach einem oder mehreren der Ansprüche 1 bis 11, dadurch gekennzeichnet, daß den Kunststoffabfällen (3,4) ein Treibmittel zugesetzt ist, welches bei Überschreiten einer vordefinierbaren Temperatur und eines vordefinierbaren Druckes aufschäumt bzw. Treibgase freisetzt.

13. Formteil nach einem oder mehreren der Ansprüche 1 bis 12, dadurch gekennzeichnet, daß bis zu maximal 50 % des Volumens des Formteils (1) durch Füllmittel (46) gebildet sind.

14. Formteil nach einem oder mehreren der Ansprüche 1 bis 13, dadurch gekennzeichnet, daß die Füllmittel (46) Holzmehl und bzw. oder Kalziumverbindungen, z.B. Kreide oder Talg, sind.

15. Formteil nach einem oder mehreren der Ansprüche 1 bis 14, dadurch gekennzeichnet, daß über den aus Kunststoffabfällen (3,4) gebildeten Querschnitt des Formteiles (1) verteilt insbesondere fadenartige Verstärkungselemente (95) eingebracht sind.

16. Formteil nach einem oder mehreren der Ansprüche 1 bis 15, dadurch gekennzeichnet, daß die Verstärkungselemente (95) durch Keramik-, Kevlar-, Karbon- oder Metallfäden und bzw. oder aus derartigen Fäden (96) gebildeten Gewirken oder Netzen bestehen.

17. Formteil nach Anspruch 15 oder 16, dadurch gekennzeichnet, daß die Kunststoffabfälle (3,4) durch in unterschiedlichen Raumrichtungen angeordnete kurze Fäden gebildet sind.

18. Verfahren zur Herstellung von Formteilen (1) durch das Plastifizieren von Kunststoffteilen mit darin enthaltenen Kunststoffabfällen (3,4) mit einer Flockengröße von kleiner 6 mm die einen Fließpunkt aufweisen, der höher ist als eine maximale Verarpeitungstemperatur des Formteils (1,57) und unter Einwirkung einer wendelförmigen Bewegung plastifiziert werden, irsbesondere zur Herstellung von Formteilen (1) nach einem der Ansprüche 1 bis 17, dadurch gekennzeichnet, daß eine Teilmenge der Kunststoffabfälle eine Wandstärke bzw. Dicke (12) größer als 0,5 mm und eine weitere Teilmenge eine Wandstärke bzw. Dicke (11) kleiner als 0,5 mm aufweist und ein Teil der Kunststoffabfälle (3,4) bis zu maximal 70 % des Volumens des Formteiles (1,57) einer Eließpunkt aufweist, der höher ist als eine maximale Verarbeitungstemperatur des Formteils (1) und daß die Kunststoffabfälle (3,4) gemeinsam mit den organischen und bzw. oder mineralischen Verunreinigungen (5,6), die einen Fließpunkt, der kleiner oder gleich der Verarbeitungstemperatur ist, bei einer Verarbeitungstemperatur zwischen 150°C und 210°C und steigendem Druck Dlastifiziert und die Kunststoffapfälle (3,4) sowie die Verunreinigungen (5,6) mit einem über der Verarbeitungstemperatur liegendem Fließpunkt dabei und bzw. anschließend davon gleichmäßig in der Kunststoffschmelze (79) verteilt werden und daß diese Kunststoffschmelze (79) insbesondere kontinuierlich durch eine Düse (51,101) ausgetragen oder in eine Form eingespritzt wird.

19. Verfahren nach Anspruch 18, dadurch gekennzeichnet, daß in dem der Düse (51,101) zugewandten Endbereich der Plastifiziervorrichtung, z.B. einem Extruder (52,53) ein Schmelzevorrat gebildet wird und dieser periodisch, insbesondere durch die wendeformige Bewegung ausgetragen wird.

20. Verfahren nach Anspruch 18 oder 19, dadurch gekennzeichnet, daß der mit Feuchtigkeit versetzte Kunststoffabfall (3,4) und die Verunreinigungen (5,6) sowie gegebenfalls die Additive bzw. Füllmittel (46) durchmischt und auf eine Temperatur von über 100°C erhitzt werden, worauf die bis dahin entstandenen Dämpfe abgeführt werden und daß die Mischung weiter verdichtet und erhitzt wird und bei einem Temperatur von über 140°C, jedoch unterhalb einer vordefinierten Verarbeitungstemperatur, Reaktionsgase aus der teilhomogenisierten Mischung abgeführt werden und danach die Mischung unter erheblicher Vedichtung plastifiziert und auf die Verarbeitungstemperatur erwärmt wird, worauf die Kunststoffschmelze (79) mit den eingelagerten Verunreinigungen (5,6) und den noch nicht plastifizierten Kunststoffabfällen (3,4) mit einem Fließpunkt, der über der Verarbeitungstemperatur liegt, durch eine Düse (51,101) oder in eine Form ausgetragen wird.

21. Verfahren nach einem oder mehreren der Ansprüche 18 bis 20, dadurch gekennzeichnet, daß der Druck in der Kunststoffschmelze (79) zwischen der Plastifiziervorrichtung und der Düse (51,101) zusätzlich erhöht wird und diese mit konstantem Fördervolumen ausgetragen wird.

22. Verfahren nach einem oder mehreren der Ansprüche 18 bis 21, dadurch gekennzeichnet, daß zwischen dem Ende der Plastifiziervorrichtung und dem Austritt aus der Düse (51,101) bzw. dem Eintritt in eine Form nicht aufgeschmolzene oder nur zum Teil aufgeschmolzene Kunststoffabfälle sowie die Verunreinigungen im wesentlichen gleichmaßig über den Düsenguerschnitt oder den Formnohlraum verteilt werden.

23. Verfahren nach einem oaer mehreren der Ansprüche 18 bis 22, dadurch gekennzeichnet, daß die Kunststoffschmelze (79) auf eine Vielzahl parallel laufender Schmelzestränge (86,87) aufgetellt und diese unmittelbar danach wieder zu einem Schmelzestrom (92) zusammengeschweißt und danach durch die Düse (51,101) in einen Kaliber oder die Form ausgetragen werden.

24. Verfahren nach einem oder mehreren der Ansprüche 18 bis dadurch gekennzeichnet, daß der Schmelzestrom (92) daran anschließend in eine räumliche Schmelzebahn verformt wird.

25. Verfahren nach einem oder mehreren der Ansprüche 18 bis 24, dadurch gekennzeichnet, daß an die Düse (51,101) anschließend die Schmelzebahn kalibriert und insbesondere durch eine Flüssigkeit abgekühlt wird.

26. Verfahren nach einem oder mehreren der Ansprüche 18 bis 25, dadurch gekennzeichnet, daß während des Austragens der Kunststoffschmelze (79) durch die Düse (51,101) bzw. in die Form in Extrusionsrichtung und bzw. oder quer dazu insbesondere enclose fadenartige Verstärkungselemente eingebracht werden.

27. Verfahren nach einem oder mehreren der Ansprüche 18 bis 26, dadurch gekennzeichnet, daß die fadenartigen Verstärkungselemente durch Keramik, Kevlar-, Karbon- oder Metallfäden und bzw. oder aus derartigen Fäden (96) gebildeten Gewirken oder Netzen gebildet sind.

28. Verfahren nach einem oder mehreren der Ansprüche 18 bis 27, dadurch gekennzeichnet, daß mehrere über den Querschnitt des Formteils (1) verteilt angeordnete Verstärkungselemente (95) angeordnet sind.

29. Verfahren nach einem oder mehreren der Ansprüche 18 bis 28, dadurch gekennzeichnet, daß die über den Querschnitt des Formteils (1) verteilt angeordneten Verstärkungselemente (95) untereinander verbunden werden.

30. Verfahren nach einem oder mehreren der Ansprüche 18 bis 29, dadurch gekennzeichnet, daß die Verstärkungselemente (95) nahe einer Oberfläche des Formteils (1) angeordnet sind.

31. Verfahren nach einem oder mehreren der Ansprüche 18 bis 30, dadurch gekennzeichnet, daß auf die räumlich verformte Schmelzebahn insbesondere vor dem Durchtritt durch die Düse (51,101) eine Deckschicht (108) aufgebracht wird.

32. Verfahren nach einem oder mehreren der Ansprüche 18 bis 31, dadurch gekennzeichnet, daß sich die Deckschicht (108) nur über einen Teil der Oberfläche des Formteils (1) erstreckt.

33. Verfahren nach einem oder mehreren der Ansprüche 18 bis 32, dadurch gekennzeichnet, daß die Kunststoffabfäile (3,4) mit einem Treibmittel versetzt werden und das Treibmittel bei einer Temperatur und einem Druck im Endbereich der Plastifizierzone die Kunststoffschmelze (79) aufschäumt bzw. in gasförmigen Zustand übergeht.

34. Verfahren nach einem oder mehreren der Ansprüche 18 bis 33, dadurch gekennzeichnet, daß eine Dicke der Schmelzebahn im Bereich der Düse (51,101) größer ist als im Bereich der Kalibrierung.

35. Verfahren nach einem oder mehreren der Ansprüche 18 bis 34, dadurch gekennzeichnet, daß die Geschwindigkeit des Schmelzestroms bzw. der Schmelzebahn im Bereich der Düsenöffnung kleiner ist als im daran anschließenden Bereich.

## Claims

1. Shaped part (1,57) of injected or extruded plastic material portions containing waste plastics (3,4), having a melting point which is higher than a maximum processing temperature of the shaped part (1, 57), and these, are welded and/or embedded in the shaped part (1,57) in distributed form, with a flock size of less than 6 mm, characterized in that the waste plastics (3, 4, 66, 67) have up to more than 50% of the volume of the shaped part (1, 57) a melting point of over 80°C and a portion of which has a wall thickness or thickness (12) of more than 0.5 mm and a further portion of which has a wall thickness or thickness (11) of less than 0.5 mm and which are provided with organic and/or mineral impurities (5,6) and at least a portion of the waste plastics (3, 4) up to a maximum of 70% of the volume of the shaped part (1, 57) having a melting point which is higher than the maximum processing temperature ,and these, and also the organic and/or mineral impurities (5, 6) are welded and/or embedded in the shaped part (1, 57) in a distributed form.

2. Shaped part according to claim 1, characterized in that a main dimension (14) of the flocks of the waste plastics (3,4) having a melting point above the processing temperature and/or the organic respectively mineral impurities (5, 6) runs predominantly approximately parallel to a direction of flow - arrow (84) - of a plastic melt of the shaped part (1, 57) and/or to a longitudinal extent - arrow (13) of the shaped part (1,57).

3. Shaped part according to claim 1 or 2, characterized in that the volume proportion of the waste plastics (4) with a thickness (12) greater than 0.5 mm and a melting point above the processing temperature, preferably of over 250°C is less than 30% of the volume of the shaped part.

4. Shaped part according to one or more of claims 1 to 3, characterized in that the volume proportion of the waste plastics (3) with a thickness (11) of less than 0.5 mm and a melting point above the processing temperature preferably of 250°C is less than 50% of the volume of the shaped part.

5. Shaped part according to one or more of claims 1 to 4, characterized in that the flocks of the waste plastics (3,4) and/or the organic respectively mineral impurities (5,6) embedded in the shaped parts (1, 57) are arranged approximately uniformly distributed in all three-dimensional directions over the the shaped part (1, 57).

6. Shaped part according to one or more of claims 1 to 5, characterized in that a volume proportion of the flocks of the waste plastics (3,4) with a melting point above the processing temperature of a volume region, for example a test element (30) immediately adjacent to a surface of the shaped part (1, 57) is greater than 50% of the volume proportion of the flocks of the waste plastics (3, 4) in a volume region, for example a test element (3) thereof, arranged at a distance from the surface of the shaped part (1,57).

7. Shaped part according to one or more of claims 1 to 6, characterized in that a volume of the flocks of the waste plastics (3, 4) with a melting point above the processing temperature and/or the organic respectively mineral impurities (5, 6) is a maximum of 70% of the volume of the shaped part (1, 57).

8. Shaped part according to one or more of claims 1 to 7, characterized in that of the volume proportion of waste plastics (3,4) of which the melting point lies above the processing temperature of the shaped part (1), a maximum of 30% of the volume is formed by flocks (7, 10) with a wall thickness or thickness (12) of greater than 0.5 mm.

9. Shaped part according to one or more of claims 1 to 8, characterized in that the waste plastics (3,4) are mixed with a heat stabilizer and/or with a light stabilizer.

10. Shaped part according to one or more of claims 1 to 9, characterized in that the waste plastics (3,4) are mixed with a flame inhibitor and/or with an oxidation inhibitor.

11. Shaped part according to one or more of claims 1 to 10, characterized in that a dye and/or a UV-absorber or an antistatic agent is added to the waste plastics (3, 4).

12. Shaped part according to one or more of claims 1 to 11, characterized in that a propellant is added to the waste plastics, which foams up or releases propellent gases when a previously definable temperature and a previously definable pressure is exceeded.

13. Shaped part according to one or more of claims 1 to 12, characterized in that up to a maximum of 50% of the volume of the shaped part (1) is formed by fillers (46).

14. Shaped part according to one or more of claims 1 to 13, characterized in that the fillers (46) are wood dust and/or calcium compounds, such as chalk or talc.

15. Shaped part according to one or more of claims 1 to 14, characterized in that in particular fibrous reinforcement elements (95) are introduced in a distributed form over the cross-section, which is formed from waste plastics (3,4), of the shaped part (1).

16. Shaped part according to one or more of claims 1 to 15, characterized in that the reinforcement elements (95) consist of ceramic, kevlar, carbon or metallic threads and/or of knitted materials or meshes formed from such threads (96).

17. Shaped part according to one or more of claims 1 to 16, characterized in that the waste plastics (3,4) are formed by short threads arranged in different three-dimensional directions.

18. Method for the production of shaped parts (1) through the plasticizing of portions of plastic material containing waste plastics (3, 4) with a flock size of less than 6 mm having a melting point which is higher than a maximum processing temperature of the shaped part (1, 57) and which are plasticized under the action of a spiral-shaped movement, in particular for the production of shaped parts (1) according to one or more of claims 1 to 17, characterized in that a portion of the waste plastics has a wall thickness or thickness (12) of more than 0.5 mm and a further portion of which has a wall thickness or thickness (11) of less than 0.5 mm and a portion of the waste plastics (3,4) up to a maximum of 70% of the volume of the shaped part (1, 57) has a melting point which is higher than a maximum processing temperature of the shaped part (1) and that the waste plastics (3,4) together with the organic and/or mineral impurities (5, 6), having a melting point which is less than or equal to the processing temperature, is plasticized at a processing temperature between 150°C and 210°C and with an increasing pressure, and the waste plastics (3,4) as well as the impurities (5, 6) having a melting point above the processing temperature are at that time and/or subsequently thereto distributed uniformly in the plastic melt (79), and that this plastic melt is discharged in particular continuously through a nozzle or is injected into a mould.

19. Method according to claim 18, characterized in that in the end region of the plasticizing device, for example of an extruder (52, 53), facing the nozzle (51, 101), a reserve of melt is formed and this is periodically discharged, in particular through the spiral movement.

20. Method according to claim 18 or 19, characterized in that the waste plastics (3, 4) which are mixed with humidity, and the impurities (5, 6), and also, if applicable, the additives or fillers (46) are thoroughly mixed and are heated to a temperature of over 100 °C, after which the vapours which have arisen up until then are removed, and that the mixture is further compressed and heated and at a temperature of over 140°C, but below a previously defined processing temperature, reaction gases are removed from the partially homogenized mixture and thereafter the mixture is plasticized under considerable compression and is heated to the processing temperature, after which the plastic melt (79) with the embedded impurities (5, 6) and the waste plastics (3, 4) which are not yet plasticized, having a melting point which lies above the processing temperature, is discharged through a nozzle (51, 101) or into a mould.

21. Method according to one or more of claims 18 to 20, characterized in that the pressure in the plastic melt (79) between the plasticizing device and the nozzle (51, 101) is additionally increased and this is discharged at a constant conveying volume.

22. Method according to one or more of claims 18 to 21, characterized in that between the end of the plasticizing device and the outlet of the nozzle (51, 101) or the entry into a mould, waste plastics which are not melted or are only partially melted and also the impurities are substantially distributed uniformly over the nozzle cross-section or the mould cavity.

23. Method according to one or more of claims 18 to 22, characterized in that the plastic melt (79) is divided into a plurality of melt billets (86, 87) running parallel, and these are immediately thereafter welded together again into a stream of melt (92) and thereafter are discharged through the nozzle (51, 101) into a caliber or into a mould.

24. Method according to one or more of claims 18 to 23, characterized in that the stream of melt (92) is thereafter formed into a three-dimensional web of melt.

25. Method according to one or more of claims 18 to 24, characterized in that following on from the nozzle (51, 101) the web of melt is calibrated and in particular cooled by a liquid.

26. Method according to one or more of claims 18 to 25, characterized in that during the discharge of the plastic melt (79) through the nozzle (51, 101) or into the mould, in particular continuous fibrous reinforcement elements are introduced in the direction of extrusion and/or transversely thereof.

27. Method according to one or more of claims 18 to 26, characterized in that the fibrous reinforcement elements are formed from ceramic, kevlar, carbon or metallic threads and/or from knitted materials or meshes formed from such threads (96).

28. Method according to one or more of claims 18 to 27, characterized in that several reinforcement elements (95) are arranged in a distributed form over the cross-section of the shaped part (1).

29. Method according to one or more of claims 18 to 28, characterized in that the reinforcement elements (95) which are arranged distributed over the cross-section of the shaped part (1) are connected with one another.

30. Method according to one or more of claims 18 to 29, characterized in that the reinforcement elements (95) are arranged close to a surface of the shaped part (1).

31. Method according to one or more of claims 18 to 30, characterized in that a cover layer (108) is applied onto the three-dimensionally formed web of melt, in particular before the passage through the nozzle (51, 101).

32. Method according to one or more of claims 18 to 31, characterized in that the cover layer (108) only extends over a portion of the surface of the shaped part (1).

33. Method according to one or more of claims 18 to 32, characterized in that the waste plastics (3,4) are mixed with a propellant, and the propellant foams up the plastic melt (79) or changes into a gaseous state at a temperature and at a pressure in the end region of the plasticizing zone.

34. Method according to one or more of claims 18 to 33, characterized in that a thickness of the web of melt in the region of the nozzle (51, 101) is greater than in the region of the calibration.

35. Method according to one or more of claims 18 to 34, characterized in that the speed of the stream of melt or the web of melt is less in the region of the nozzle opening than in the region adjacent thereto.

## Revendications

1. Préforme (1, 57) en morceaux de matière synthétique moulés par injection ou extrudés, avec des déchets de matière synthétique (3, 4) qui y sont contenus, qui présentent un point de fusion qui est plus élevé qu'une température maximale de traitement de la préforme (1, 57) et qui sont soudés et/ou noyés en étant répartis dans la préforme, ayant une grandeur des flocons de moins de 6 mm, caractérisée en ce que les déchets de matière synthétique (3, 4, 66, 67) présentent pour plus de 50% du volume de la préforme (1, 57), un point de fusion au delà de 80°C et une grande partie présente une épaisseur de paroi ou, respectivement, épaisseur (12) plus importante que 0,5 mm et une autre partie présente une épaisseur (11) plus faible que 0,5 mm et ils sont pourvus d'impuretés organiques et/ou minérales (5, 6) et au moins, pour une partie des déchets de matière synthétique (3, 4) jusqu'au maximum 70% du volume de la préforme (1, 57), le point de fusion est plus élevé que la température maximale de traitement et ceux-ci ainsi que les impuretés organiques et/ou minérales (5, 6) sont soudés et/ou noyés en étant répartis dans la préforme (1, 57).

2. Préforme selon la revendication 1, caractérisée en ce qu'une dimension principale (14) des flocons des déchets de matière synthétique (3, 4) ayant un point de fusion au delà de la température de traitement et/ou des impuretés organiques ou minérales (5, 6) ,passe à peu près parallèlement à la direction d'écoulement (flèche 84) d'une matière synthétique fondue de la préforme (1, 57) et/ou une extension longitudinale (flèche 13) de la préforme (1, 57).

3. Préforme selon la revendication 1 ou 2, caractérisée en ce que la proportion en volume des déchets de matière synthétique (4),avec une épaisseur (12) plus importante que 0,5 mm et un point de fusion au delà de la température de traitement, avantageusement au delà de 250°C, représente moins de 30% du volume de la préforme.

4. Préforme selon l'une quelconque des revendications 1 à 3, caractérisée en ce que la proportion en volume des déchets de matière synthétique (3) ayant une épaisseur (11) de moins de 0,5 mm et un point de fusion au delà de la température de traitement, avantageusement de 250°C, est plus faible que 50% du volume de la préforme.

5. Préforme selon l'une quelconque des revendications 1 à 4, caractérisée en ce que les flocons des déchets de matière synthétique (3, 4) et/ou des impuretés organiques ou minérales (5, 6) qui sont noyés dans les préformes (1, 57),sont agencés en étant répartis dans toutes les directions sur la totalité de la préforme (1, 57),presque régulièrement.

6. Préforme selon l'une quelconque des revendications 1 à 5, caractérisée en ce que la proportion en volume des flocons des déchets de matière synthétique (3, 4) ayant un point de fusion au delà de la température de traitement d'une zone du volume directement voisine de la surface de la préforme (1, 57) ,par exemple, d'un échantillon (30), est plus importante que 50% de la proportion du volume des flocons des déchets de matière synthétique (3, 4) dans une zone du volume qui est à une certaine distance de la surface de la préforme (1, 57), par exemple, d'un échantillon (30).

7. Préforme selon l'une quelconque des revendications 1 à 6, caractérisée en ce qu'un volume des flocons des déchets de matière synthétique (3, 4) ayant un point de fusion au delà de la température de traitement et/ou des impuretés organiques ou minérales (5, 6) représente au maximum 70% du volume de la préforme (1, 57).

8. Préforme selon l'une quelconque des revendications 1 à 7, caractérisée en ce que, dans la proportion du volume des déchets de matière synthétique (3, 4) dont le point de fusion se trouve au-delà de la température de traitement de la préforme (1), il y a au maximum 30% du volume formé de flocons (7, 10) ayant une épaisseur (12) de plus de 0,5 mm.

9. Préforme selon l'une quelconque des revendications 1 à 8, caractérisée en ce que les déchets de matière synthétique (3, 4) sont mélangés à un stabilisant à la chaleur et/ou un stabilisant à la lumière.

10. Préforme selon l'une quelconque des revendications 1 à 9, caractérisée en ce que les déchets de matière synthétique (3,4) sont mélangés à un. agent ignifuge et/ou à un inhibiteur d'oxydation.

11. Préforme selon l'une quelconque des revendications 1 à 10, caractérisée en ce qu'aux déchets (3, 4) de matière synthétique est ajouté un colorant et/ou un agent absorbant les UV ou bien un agent antistatique.

12. Préforme selon l'une quelconque des revendications 1 à 11, caractérisée en ce qu'aux déchets de matière synthétique (3, 4) est ajouté un agent gonflant qui, lorsque sont dépassées une température prédéfinie et une pression prédéfinie, mousse et/ou libère des gaz gonflants.

13. Préforme selon l'une quelconque des revendications 1 à 12, caractérisée en ce qu'au maximum 50% du volume de la préforme (1) est formé de charges (46).

14. Préforme selon l'une quelconque des revendications 1 à 13, caractérisée en ce que les charges (46) sont de la farine de bois et/ou des composés de calcium, par exemple de la craie ou du talc.

15. Préforme selon l'une quelconque des revendications 1 à 14, caractérisée en ce que, sur la section transversale de la préforme (1) qui est formée des déchets de matière synthétique (3, 4), sont introduits, en étant répartis, des éléments de renforcement (95) en forme de fils.

16. Préforme selon l'une quelconque des revendications 1 à 15, caractérisée en ce que les éléments de renforcement (95) se composent de fils en céramique, Kevlar, carbone ou métal et/ou de tissus ou filets formés de tels fils (96).

17. Préforme selon la revendication 15 ou 16, caractérisée en ce que les déchets de matière synthétique (3, 4) sont formés de fils courts agencés dans diverses directions.

18. Procédé de production de préformes (1) par la plastification de morceaux de matière synthétique avec des déchets de matière synthétique (3, 4) qui y sont contenus ayant une grandeur des flocons de moins de 6 mm et qui présentent un point de fusion qui est plus élevé qu'une température maximale de traitement de la préforme (1, 57) et qui se plastifient sous l'effet d'un mouvement en forme d'hélice, en particulier pour la production de préformes (1) selon l'une quelconque des revendications 1 à 17, caractérisé en ce qu'une partie des déchets de matière synthétique a une épaisseur (12) qui est plus importante que 0,5 mm et une autre partie a une épaisseur (11) qui est plus petite que 0,5 mm et une partie des déchets de matière synthétique (3,4) représentant au maximum 70% du volume de la préforme (1, 57) présente un point de fusion qui est plus élevé qu'une température maximale de traitement de la préforme (1) et en ce que les déchets de matière synthétique (3, 4) sont plastifiés en même temps que les impuretés organiques et/ou minérales (5, 6) qui présentent un point de fusion qui est plus faible que ou égal à la température de traitement, à une température de traitement comprise entre 150°C et 210°C et à une pression croissante et en ce que les déchets de matière synthétique (3, 4) ainsi que les impuretés (5, 6) ayant un point de fusion au-dessus de la température de traitement, sont répartis, à ce moment ou subséquemment, régulièrement, dans la matière synthétique fondue (79) et en ce que cette matière synthétique fondue (79) est transmise, en particulier, continuellement à travers une tuyère (51, 101) ou bien est injectée dans un moule.

19. Procédé selon la revendication 18, caractérisé en ce que, dans la partie extrême du dispositif de plastification qui est tournée vers la tuyère (51, 101), par exemple, d'une extrudeuse (52, 53), est formée une alimentation du produit fondu et celui-ci est extrait périodiquement, en particulier par le mouvement en forme d'hélice.

20. Procédé selon la revendication 18 ou 19, caractérisé en ce que les déchets de matière synthétique (3, 4) mélangés à de l'humidité et les impuretés (5, 6) ainsi que, le cas échéant, les additifs ou, respectivement, les charges (46) sont mélangés et sont chauffés à une température au delà de 100°C, ce qui permet d'éliminer les vapeurs qui en résultant et en ce que le mélange est de plus condensé et chauffé et, à une température au delà de 140°C, mais cependant en dessous d'une température prédéfinie de traitement, les gaz réactionnels du mélange partiel homogénéisé s'échappent et ensuite le mélange est plastifié sous une condensation importante et est chauffé à la température de traitement, par suite la matière synthétique fondue (79) avec les impuretés (5, 6) qui y sont introduites, ainsi que les déchets de matière synthétique (3, 4) qui ne sont pas encore plastifiés, ayant un point de fusion qui est au delà de la température de traitement, sort par une tuyère (51, 101) ou est introduite dans un moule.

21. Procédé selon l'une quelconque des revendications 18 à 20, caractérisé en ce que la pression dans la matière synthétique fondue (79),entre le dispositif de plastification et la tuyère (51, 101), est encore augmentée et on extrait avec des volumes constants d'alimentation.

22. Procédé selon l'une quelconque des revendications 18 à 21, caractérisé en ce qu'entre la fin du dispositif de plastification et la sortie de la tuyère (51, 101) ou, respectivement, l'entrée dans un moule, les déchets de matière synthétique qui ne sont pas fondus ou qui ne sont que partiellement fondus ainsi que les impuretés sont répartis régulièrement sur la section transversale de la tuyère ou dans la cavité du moule.

23. Procédé selon l'une quelconque des revendications 18 à 22, caractérisé en ce que la matière synthétique fondue (79) est répartie en un certain nombre de boyaux fondus parallèles (86, 87) et ceux-ci se ressoudent tout de suite après en un courant en fusion (92) et ensuite sortent à travers la tuyère (51, 101) vers un calibre ou le moule.

24. Procédé selon l'une quelconque des revendications 18 à 23, caractérisé en ce que le courant du produit en fusion (92) est ensuite façonné en une bande du produit fondu.

25. Procédé selon l'une quelconque des revendications 18 à 24, caractérisé en ce que, à la suite de la tuyère (51, 101), la bande du produit fondu est calibrée et, en particulier, est refroidie par un liquide.

26. Procédé selon l'une quelconque des revendications 18 à 25, caractérisé en ce que, pendant l'évacuation de la matière synthétique fondue (79) à travers la tuyère (51, 101) ou, respectivement, dans le moule dans la direction de l'extrusion et/ou transversalement à celle-ci, des éléments de renforcement en forme de fils sans fin sont introduits.

27. Procédé selon l'une quelconque des revendications 18 à 26, caractérisé en ce que les éléments de renforcement en forme de fils sont formés de fils en céramique, Kevlar, carbone ou métal et/ou en tissus ou filets formés de tels fils (96).

28. Procédé selon l'une quelconque des revendications 18 à 27, caractérisé en ce que plusieurs éléments de renforcement (95) sont agencés en étant répartis sur la section transversale de la préforme (1).

29. Procédé selon l'une quelconque des revendications 18 à 28, caractérisé en ce que les éléments de renforcement (95),agencés en étant répartis sur la section transversale de la préforme (1), sont liés les uns aux autres.

30. Procédé selon l'une quelconque des revendications 18 à 29, caractérisé en ce que les éléments de renforcement (95) sont agencés à proximité d'une surface de la préforme (1).

31. Procédé selon l'une quelconque des revendications 18 à 30, caractérisé en ce qu'une couche de recouvrement (108) est prévue au-dessus de la bande en fusion façonnée dans l'espace, en particulier avant le passage à travers la tuyère (51, 101).

32. Procédé selon l'une quelconque des revendications 18 à 31, caractérisé en ce que la couche de recouvrement (108) ne s'étend que sur une partie de la surface de la préforme (1).

33. Procédé selon l'une quelconque des revendications 18 à 32, caractérisé en ce que les déchets de matière synthétique (3, 4) sont mélangés à un agent gonflant et en ce que l'agent gonflant mousse à une température et à une pression dans la partie extrême de la zone de plastification de la matière synthétique fondue (79), pour se transformer à l'état gazeux.

34. Procédé selon l'une quelconque des revendications 18 à 33, caractérisé en ce que l'épaisseur de la bande du produit fondu dans la zone de la tuyère (51, 101) est plus grande que dans la zone du calibrage.

35. Procédé selon l'une quelconque des revendications 18 à 34, caractérisé en ce que la vitesse du courant du produit fondu ou, respectivement, de la bande du produit fondu dans la zone de l'ouverture de la tuyère est plus petite que dans la zone qui s'y raccorde.
